# EUROPÄISCHE PATENTANMELDUNG

(11) **EP 3 739 865 A1**
(43) Veröffentlichungstag der Anmeldung: **18.11.2020**
(21) Anmeldenummer: 20184264.8
(22) Anmeldetag: 16.12.2014
(51) Int. Cl.: H04N 5/225, G02B 27/58, G06T 3/40, H04N 5/232, H04N 5/369

(54) **MEHRKANALOPTIK-BILDAUFNAHMEVORRICHTUNG**

(30) Priorität: 19.12.2013 DE 102013226789
(62) Teilanmeldung aus: 14825286.9
(71) Anmelder: Fraunhofer-Gesellschaft zur Förderung der angewandten Forschung e.V., 80686 München (DE)
(72) Erfinder: OBERDÖRSTER, Alexander, 07745 Jena (DE)
(74) Vertreter: König, Andreas Rudolf

(57) **Zusammenfassung**

Die Erfindung bezieht sich auf eine Mehrkanaloptik-Bildaufnahmevorrichtung (1), bei der zumindest ein erster Kanal (2) eine anamorphotische Abbildungsoptik (5) aufweist und der erste Kanal (2) zumindest mit einem zweiten Kanal (3) eine zumindest teilweise Gesichtsfeldüberlappung aufweist. Außerdem bezieht sich die Erfindung auf eine Mehrkanaloptik-Bildaufnahmevorrichtung (1), die zumindest einen ersten Kanal (2) und einen zweiten Kanal (3) aufweist, wobei der erste Kanal (2) mit dem zweiten Kanal (3) eine zumindest teilweise Gesichtsfeldüberlappung aufweist, und der zweite Kanal (2) eine erste zweidimensionale Anordnung von Detektorpixeln (4) umfasst und der zweite Kanal (2) eine zweite zweidimensionale Anordnung von Detektorpixeln (4) umfasst und die erste zweidimensionale Anordnung gegenüber der zweiten zweidimensionalen Anordnung inkongruent ist. Durch die vorgeschlagenen Lösungen wird erreicht, dass die Auflösung eines Gesamtbildes, das aus Einzelbildern der Kanäle (2, 3) zusammengesetzt ist, hinsichtlich eines aufzunehmenden Objekts im Wesentlichen entfernungsunabhängig ist.

## Beschreibung

Die Patentanmeldung bezieht sich auf eine Mehrkanaloptik-Bildaufnahmevorrichtung, bei der zumindest ein erster Kanal mit einem zweiten Kanal eine zumindest teilweise Gesichtsfeldüberlappung aufweist.

Es existieren Mehrkanaloptik-Bildaufnahmevorrichtungen ([1], [2], [3]), die anstelle einer einzelnen Linse eine Abbildungsoptik aus nebeneinander angeordneten optischen Kanälen verwenden. Die in den Kanälen erzeugten Einzelbilder werden getrennt aufgezeichnet und elektronisch zu einem Gesamtbild kombiniert. Einige mehrkanalige Systeme arbeiten mit Überdeckung, d.h. ein Gesichtsfeldbereich wird von mehreren Kanälen abgebildet. Daraus ergibt sich eine Redundanz, die zur Gewinnung von Zusatzinformationen, wie beispielsweise Tiefenkarten, genutzt werden kann.

Eine solche Redundanz reduziert jedoch auch die Gesamtauflösung der Bildaufnahmevorrichtung. Daher werden die Blickrichtungen der Kanäle in einigen Fällen so eingestellt, dass die Abtastmuster zweier Kanäle auf einem abzubildenden Objekt oder Objektteil gegeneinander verstimmt sind. Ein zweiter Kanal trägt also nicht nur durch seinen anderen Standpunkt weitere Informationen zum Gesamtbild bei, sondern auch durch Verfeinerung der Abtastung. Bei entsprechender Leistung der Mehrkanaloptik und Nachverarbeitung der von den Kanälen gesammelten Daten führt dies auch zu einer höheren Auflösung des aus den Einzelbildern rekonstruierten Gesamtbildes, Überauflösung oder Superresolution genannt.

Da benachbarte Kanäle auf dem Sensor lateral versetzt angeordnet sind, weisen sie häufig eine Parallaxe auf, so dass ein Objekt je nach Entfernung unter verschiedenen Winkeln erscheint. Durch diese Parallaxe ist die Verstimmung der Abtastmuster entfernungsabhängig. Wenn zwei Kanäle im unendlichen Ideal verstimmt sind, so wird es dennoch Entfernungen geben, bei der die Abtastmuster dieser Kanäle nicht phasenverschoben sind, sondern exakt zur Deckung kommen. Eine Überauflösung entsteht in diesen Fällen nicht mehr.

Da die Auflösung der Bildaufnahmevorrichtung hinsichtlich des Gesamtbildes entfernungsabhängig ist, ergibt sich ein zusätzliches Problem. In einer einkanaligen Digitalkamera muss die Auflösung der Optik an die Abtastrate des Bildsensors angepasst sein, um eine Unterabtastung und ein damit verbundenes Aliasing zu vermeiden. Dies geschieht entweder durch die Auslegung der abbildenden Linsen selbst oder durch Einfügen eines sogenannten Anti-Aliasing-Filters, der auch optischer Tiefpass genannt wird. Wenn die Winkelauflösung, wie im obigen Fall, entfernungsabhängig ist, müsste die Tiefpasswirkung der Szene angepasst werden, und zwar für jeden Bildteil entsprechend seiner Entfernung. Dynamische, lokal adaptierbare optische Tiefpassfilter sind jedoch bislang nicht realisierbar.

Das Problem der entfernungsabhängigen Auflösung trifft nicht nur die oben beschriebene Anordnung, sondern auch andere Mehrkanaloptik-Bildaufnahmevorrichtungen, speziell auch solche, bei denen die Blickrichtung aller Kanäle gleich ist ([1], [2]). Es betrifft außerdem sogenannten plenoptische Kameras, die zur Abbildung eines Objekts ein herkömmliches Objektiv mit einer Mehrkanaloptik kombinieren ([4], [5]).

Zwar kann man bei Mehrkanaloptik-Aufnahmevorrichtungen vereinfachend von Abtastpunkten und Abtastmustern sprechen, tatsächlich jedoch misst ein Detektorpixel der Mehrkanaloptik-Aufnahmevorrichtungen nicht die Intensität an einem diskreten Punkt, sondern integriert über einen Raumwinkel. Das beschriebene Problem bleibt jedoch dasselbe: Je nach Objektentfernung überlagern sich Integrationsflächen von Detektorpixeln benachbarter Kanäle mehr oder weniger. Je geringer die Überdeckung, desto hochauflösender und robuster die Bildrekonstruktion des Gesamtbildes. Folglich ist die Auflösung des rekonstruierten Gesamtbildes auch bei dieser Betrachtung entfernungsabhängig.

Üblicherweise wurde das beschriebene Problem bisher hingenommen. Es entsteht bei Mehrkanaloptik-Bildaufnahmevorrichtungen, die mit Auflösungserhöhung durch überlagerte Blickfelder arbeiten. Diese Systeme sind gegenwärtig kaum verbreitet und bei herkömmlichen Einkanaloptik-Bildaufnahmevorrichtungen besteht das Problem nicht.

Ein möglicher existierender Lösungsansatz ist das Bereitstellen eines Kamera-Arrays, dessen Kanäle individuell gedreht sind [6]. So kann eine unregelmäßigere Abtastung erzeugt werden. Problematisch kann dabei sein, dass Arrays aus kompletten Kameras, also Sensor und Optik insgesamt, gegeneinander verdreht werden müssen, was die Bereitstellung einer Mehrkanaloptik-Bildaufnahmevorrichtung, die kompakt gebaut sein soll, erschwert. Außerdem kann der Nachteil entstehen, dass sich gegeneinander verdrehte Bildfelder nicht ohne Platzverschwendung nebeneinander platzieren lassen, wenn ein durchgehendes Sensorsubstrat für alle Kanäle verwendet wird.

Ferner existieren Penrose-Pixel, die eine spezielle Geometrie aufweisen, um pseudozufällige Abtastmuster zu erzeugen [7]. Sie werden für die Auflösungserhöhung mit einkanaligen Systemen eingesetzt. Die Überabtastung kann über Mehrfachaufnahmen und Verschiebung der Kamera zwischen Aufnahmen erfolgen. Für diese Lösung sind verschiedene Varianten von rautenförmigen Pixeln notwendig. Eine derartige Umsetzung würde bei Mehrkanaloptik-Bildaufnahmevorrichtungen erheblichen Aufwand für eine Neuentwicklung der Pixel und für die Verdrahtung der pseudozufälligen Pixelanordnung erfordern.

Entsprechend den voranstehenden Erläuterungen besteht ein Bedarf, Mehrkanaloptik-Bildaufnahmevorrichtungen zu schaffen, die die genannten Nachteile beseitigen. Insbesondere sollen Mehrkanaloptik-Bildaufnahmevorrichtungen geschaffen werden, deren Auflösung im Wesentlichen entfernungsunabhängig ist. Zudem sollen sie im Vergleich zu existierenden Lösungen einfacher herzustellen sein und kompakter gebaut werden können. Mittels derart verbesserter Mehrkanaloptik-Bildaufnahmevorrichtungen sollen Mehrkanaloptik-Bildaufnahmeverfahren ermöglicht werden, mit denen hochauflösendere Objektaufnahmen möglich sind, die von einem Abstand zwischen Mehrkanaloptik-Bildaufnahmevorrichtung und Objekt im Wesentlichen unabhängig sind:

Die Aufgabe der Erfindung wird durch die Mehrkanaloptik-Bildaufnahmevorrichtungen und die Mehrkanaloptik-Bildaufnahmeverfahren entsprechend den angehängten unabhängigen Patentansprüchen gelöst. Die davon jeweils abhängigen Patentansprüche beziehen sich auf Ausgestaltungen von Ausführungsformen der Erfindung. Die Bezugszeichen in den Ansprüchen und in der Beschreibung sollen ausschließlich die Lesbarkeit verbessern und keine beschränkende Wirkung entfalten.

Die beanspruchten Vorrichtungen und Verfahren ermöglichen, vergleichsweise hochauflösende und robuste Gesamtbilder aus von Kanälen der Mehrkanaloptik-Bildaufnahmevorrichtung aufgenommenen Einzelbildern zu erhalten. Die Auflösung des Gesamtbildes wird weitgehend entfernungsunabhängig, da die Kanäle ein verbessertes Abtastmuster für den Objektraum bereitstellen. Die Erfindung verhindert, dass sich beim Aufnehmen von Objekten in bestimmten Entfernungen Abtastpunkte der Kanäle häufen, so dass erfindungsgemäß eine relativ homogene Abtastung des Objektraums erreicht wird, deren Dichte ausreichend entfernungsunabhängig ist. Gleichzeitig wird zudem ermöglicht, relativ einfach herzustellende Anordnungen von Detektorpixeln zu wählen, so dass die Herstellung der Mehrkanaloptik-Bildaufnahmevorrichtungen vergleichsweise einfach und preiswert erfolgen kann. Weitere Vorteile der Erfindung werden im Folgenden anhand von Ausführungsformen der Erfindung erläutert, die Teil der abhängigen Ansprüche sind.

In Ausführungsformen der Erfindung ist vorgesehen, dass jeder Kanal der Mehrkanaloptik-Bildaufnahmevorrichtung eine zweidimensionale Anordnung von Detektorpixeln und eine Abbildungsoptik, die dafür eingerichtet ist, eine Abbildung auf die Anordnung von Detektorpixeln zu bewirken, aufweist. Auf diese Weise können alle Kanäle in vergleichbaren Herstellungsverfahren erstellt werden, so dass eine kostengünstige Produktion möglich wird. Außerdem ermöglicht die zweidimensionale Anordnung der Detektorpixel eine kompakte Bauform. Es können aber auch nur einer oder einige der Kanäle, beispielsweise zwei Kanäle, eine zweidimensionale Anordnung von Detektorpixeln und eine Abbildungsoptik, die dafür eingerichtet ist, eine Abbildung auf die Anordnung von Detektorpixeln zu bewirken, aufweisen, wenn der Anwendungszweck eine solche Ausgestaltung erfordert. Die zweidimensionale Anordnung ist vorzugsweise bei allen Kanälen in einer Ebene angeordnet, kann aber auch bei einem oder mehreren Kanälen sich konkav oder konvex wölbend, bezogen auf die Blickrichtung des derart ausgebildeten Kanals, angeordnet sein.

In Ausführungsformen der Erfindung weisen zwei oder mehr Kanäle unterschiedliche Blickrichtungen auf. So kann vorteilhafterweise ein relativ großer Objektraum abgetastet werden. In einigen Ausführungsformen weisen alle Kanäle unterschiedliche Blickrichtungen auf. In Ausführungsformen ist jedoch auch vorgesehen, dass zwei oder mehr Kanäle gleiche Blickrichtungen aufweisen. Auch können alle Kanäle gleiche Blickrichtungen aufweisen. So kann eine besonders wirkungsvolle Superresolution erreicht werden.

In manchen Ausführungsformen ist vorgesehen, dass sich die Gesichtsfelder von zwei oder mehr Kanälen teilweise überlappen. So kann eine höhere Auflösung des aus den Einzelbildern der einzelnen Kanäle zusammengesetzten Gesamtbildes erreicht werden. In einigen Ausführungsformen ist vorgesehen, dass sich die Gesichtsfelder zweier Kanäle zu mehr als 10% überlappen, beispielsweise auch zu mehr als 20% oder auch zu mehr als 30%, zu mehr als 70%, oder auch zu mehr als 90%. In manchen Ausführungsformen überlappen sich die Gesichtsfelder zweier benachbarter Kanäle teilweise. In manchen Ausführungsformen überlappen sich die Gesichtsfelder aller Kanäle teilweise. Einige Ausführungsformen der Erfindung zeichnen sich dadurch aus, dass sich die Gesichtsfelder von zwei oder mehr Kanälen vollständig überlappen. So kann eine besonders hohe lokale Auflösung erreicht werden. Es sind auch Ausführungsformen vorgesehen, bei der sich die Gesichtsfelder aller Kanäle vollständig überlappen. In anderen Ausführungsformen überlappen sich die Gesichtsfelder zweier benachbarter Kanäle vollständig.

Bei manchen Ausführungsformen der vorliegenden Erfindung weist die anamorphotische Abbildungsoptik eine oder mehrere Mikrolinsen auf, die dafür eingerichtet sind, ein abzubildendes Objekt in einem Seitenverhältnis 1:1,05 oder mehr auf einer Anordnung von Detektorpixeln des ersten Kanals verzerrt abzubilden. So kann sich eine besonders günstige und einfache Lösung ergeben, mit Hilfe der die Auflösungserhöhung bei Mehrkanaloptik-Bildaufnahmevorrichtungen entfernungsunabhängig eingerichtet werden kann. Ein besonderer Vorteil dieser Ausführungsform kann sich daraus ergeben, dass allgemein bekannte, in einer Aufsicht entlang einer Detektionsrichtung rechteckig und zudem quadratisch geformte Pixel zur Bildaufnahme verwendet werden können, so dass eine besonders kostengünstige Herstellung einer Mehrkanaloptik-Bildaufnahmevorrichtung ermöglicht werden kann. Einige oder alle Detektorpixel der Bildaufnahmevorrichtung können in der Aufsicht aber auch rechteckig und zudem nicht-quadratisch geformt sein. Ein Detektorpixel kann rechteckig und zudem nicht-quadratisch geformt sein, wenn er in einer Aufsicht parallel zu einer Detektionsrichtung des Detektorpixels genau vier Seiten aufweist, von denen jeweils zwei gleich lang und zudem parallel zueinander angeordnet sind, so dass zwei Seitenpaare zueinander paralleler Seiten des Detektorpixels eine geometrisch geschlossene Form bilden, die vier gleiche Innenwinkel von jeweils 90 Grad zwischen jeweils zwei Seiten aufweist, wobei zueinander im Winkel von 90 Grad angeordnete Seiten dieser geometrischen Form sich in ihrer Länge unterscheiden, so dass zwei zueinander im Winkel von 90° angeordnete Seiten des Detektorpixels ein Detektorpixelseitenverhältnis zueinander haben, das sich von einem Detektorpixelseitenverhältnis 1:1 unterscheidet. Im Gegensatz dazu kann ein rechteckig und zudem quadratisch geformter Detektorpixel vier gleich lange Seiten haben, die eine geometrisch geschlossene Form mit vier gleichen Innenwinkeln von jeweils 90 Grad bilden, wobei das Detektorpixelseitenverhältnis zweier im Winkel von 90 Grad zueinander angeordneter Seiten 1:1 ist. Beispielsweise ist das Detektorpixelseitenverhältnis eines rechteckigen und zudem nicht-quadratischen Detektorpixels 1:1,05 oder mehr, zum Beispiel also 1:1,1 oder mehr, 1:2 oder mehr oder auch 1:10 oder mehr. Das Detektorpixelseitenverhältnis eines Detektorpixels kann ungleich dem Seitenverhältnis der optischen Verzerrung sein, die durch die Mikrolinsen bewirkbar ist. In Ausführungsformen der Erfindung können einer, einige oder alle Detektorpixel in einer Aufsicht entlang einer Detektionsrichtung rund, beispielsweise kreisrund, geformt sein. In Ausführungsformen ist vorgesehen, dass das Seitenverhältnis des abzubildenden Objekts mittels Mikrolinsen im Verhältnis 1:1,1 oder mehr verzerrt wird. Andere Ausführungsformen sehen vor, dass das Seitenverhältnis des abzubildenden Objekts im Verhältnis 1:1,3 oder mehr, 1:1,5 oder mehr, 1:2 oder mehr, 1:5 oder mehr, 1:8 oder mehr, oder auch 1:10 oder mehr verzerrt abgebildet wird. Eine unverzerrte Abbildung entspricht einer Abbildung im Seitenverhältnis 1:1, was bedeutet, dass das Objekt in der Bildebene bezogen auf das Seitenverhältnis realitätsgetreu abgebildet wird. Es ist möglich, dass zwei oder mehr Mikrolinsen der Abbildungsoptik dafür eingerichtet sind, das abzubildende Objekt im Seitenverhältnis 1:1, also unverzerrt abzubilden, beispielsweise, wenn die Aufgabe der Erfindung nicht mit Hilfe einer verzerrenden Abbildungsoptik gelöst werden soll. Dann beispielsweise können sogar alle Mikrolinsen dafür eingerichtet sein, das abzubildende Objekt unverzerrt abzubilden.

In Ausführungsformen der Erfindung ist vorgesehen, dass alle Kanäle eine zweidimensionale Anordnung von Detektorpixeln umfassen, die je Kanal eine Pixelmatrix aus Pixelzeilen und Pixelspalten bilden, wobei die Pixelzeilen und Pixelspalten jedes Kanals zueinander senkrecht angeordnet sind, und alle Kanäle in einer Kanalmatrix aus zueinander senkrechten Kanalzeilen und Kanalspalten angeordnet sind, und die anamorphotische Abbildungsoptik dafür eingerichtet ist, ein abzubildendes Objekt auf jedem Kanal mit einer dem jeweiligen Kanal, hinsichtlich allen anderen Kanälen, eindeutig zuordenbarer Verzerrung in einem Seitenverhältnis 1:1,05 oder mehr abzubilden. So kann erreicht werden, dass auf jeden Kanal ein im Vergleich mit den anderen Kanälen unterschiedlich verzerrtes Abbild des aufzunehmenden Objekts aufgenommen werden kann. Auf diese Weise kann man besonders günstig verhindern, dass sich in einer bestimmten Entfernung das Abtastmuster der Kanäle häuft, weil die Abbildungsoptik auf jedem Kanal ein anderes Abbild des Objekts abbilden kann. Ein entfernungsabhängiger Auflösungsverlust wird somit reduziert oder verhindert. Stattdessen wird erreicht, dass das Abtastmuster unabhängig von der Entfernung relativ homogen bleibt und eine entfernungsunabhängige Abtastung des Objektraums mit gleichbleibend ausreichender Dichte ermöglicht. Die Abbildungsoptik ist gemäß einiger Ausführungsformen so eingerichtet, dass die Verzerrung gleichmäßig oder zumindest kontinuierlich variierend über den jeweiligen Kanal bzw. über alle Bildpunkte/Pixel des Kanals erfolgt. Eine kontinuierliche Variation bedeutet bspw. eine Veränderung der Streckung (Seitenverhältnis > 1) von einem Mittelpunkt der Optik bezüglich eines Kanals hin zu einem Rand des jeweiligen Kanals. In einigen Ausführungsformen ist vorgesehen, dass alle Kanäle jeweils eine Pixelmatrix aufweisen, bei der eine Pixelzeilenbreite gleich einer Pixelspaltenbreite ist. In anderen Ausführungsformen ist vorgesehen, dass alle Kanäle jeweils eine Pixelmatrix aufweisen, bei der eine Pixelzeilenbreite ungleich einer Pixelspaltenbreite ist. Zudem sind Ausführungsformen vorgesehen, in deren Kanalmatrizen zusätzlich oder alternativ alle Kanalspalten parallel zueinander angeordnet sind und/oder alle Kanalzeilen parallel zueinander angeordnet sind. Derartige Kanalmatrizen sind besonders einfach herzustellen und ermöglichen daher eine kostengünstige Produktion einer Mehrkanaloptik-Bildaufnahmevorrichtung gemäß der vorliegenden Erfindung. In Ausführungsformen ist vorgesehen, dass der erste Kanal Detektorpixel aufweist, die ein anderes Detektorpixelseitenverhältnis aufweisen, als Detektorpixel des zweiten Kanals. Alle Detektorpixel eines Kanals können das gleiche Detektorpixelseitenverhältnis oder unterschiedliche Detektorpixelseitenverhältnisse aufweisen. Zudem können alle Detektorpixel eines Kanals von der Form her in einer Aufsicht gleich oder unterschiedlich sein. Beispielsweise können einige oder alle Detektorpixel eines Kanals rechteckig und zudem nicht-quadratisch sein. Es können auch einige oder alle Detektorpixel aller Kanäle rechteckig und zudem nicht-quadratisch sein. In einigen Ausführungsformen weist jeder Kanal Detektorpixel auf, die rechteckig und zudem nicht-quadratisch sind, wobei sich das Detektorpixelseitenverhältnis dieser Detektorpixel von Kanal zu Kanal individuell unterscheidet, so dass jeder Kanal über sein Detektorpixelseitenverhältnis eindeutig identifizierbar ist.

In einigen Ausführungsformen weist die anamorphotische Abbildungsoptik eine oder mehrere Mikrolinsen mit einer zylindrischen Oberfläche auf. Diese können besonders dafür geeignet sein, ein abzubildendes Objekt mit einem veränderten Seitenverhältnis verzerrt auf einer Anordnung von Detektorpixeln abzubilden. In Ausführungsformen sind diese Mikrolinsen als Zylinderlinsen eingerichtet.

Einige Ausführungsformen der Erfindung sehen vor, dass die Mehrkanaloptik-Bildaufnahmevorrichtung eine plenoptische Kamera ist, die zusätzlich eine weitere Linse aufweist, die der Abbildungsoptik vorgeschaltet ist. Die Abbildungsoptik kann eine anamorphotischen Abbildungsoptik sein. Plenoptische Kameras können erlauben, über eine Vielzahl von Kanälen Einzelaufnahmen eines Objekts zu erstellen und nachträglich den Fokus eines Gesamtbildes, das aus den Einzelaufnahmen gebildet ist, festzulegen. In derartigen plenoptischen Kameras kann eine entfernungsunabhängige Abtastung des Objektraums mit gleichbleibend hoher Auflösung besonders vorteilhaft sein, weil in einigen Ausführungsformen von plenoptischen Kameras Kanäle eingesetzt werden, die im Vergleich mit Kanälen handelsüblicher Digitalkameras eine verringerte Pixelzahl aufweisen. Daher kann es besonders wünschenswert sein, einen entfernungsabhängigen Auflösungsverlust zu verringern oder zu verhindern.

In manchen Ausführungsformen der Erfindung umfasst der erste Kanal eine erste zweidimensionale Anordnung von Detektorpixeln und der zweite Kanal eine zweite zweidimensionale Anordnung von Detektorpixeln, und die erste zweidimensionale Anordnung ist gegenüber der zweiten zweidimensionalen Anordnung inkongruent. Dies ermöglicht eine Ausführungsform, bei der nicht nur die Optik der Mehrkanaloptik-Bildaufnahmevorrichtung, sondern auch die Aufnahmeelektronik zu einer verbesserten Auflösung des aufzunehmenden Objekts beitragen kann, so dass die Auflösung weitgehend oder vollständig entfernungsunabhängig ist. Ist die zweite zweidimensionale Anordnung gegenüber der ersten zweidimensionalen Anordnung inkongruent, so wird ebenfalls erreicht, dass unabhängig von der Entfernung des aufzunehmenden Objekts eine relativ homogene Abtastung des Objektraums mit einer ausreichend entfernungsunabhängigen Dichte ermöglicht wird. Ein Parallaxen-Effekt wird verringert oder verhindert, so dass eine verbesserte Mehrkanaloptik-Bildaufnahmevorrichtung bereitgestellt werden kann. Durch die Kombination zueinander inkongruent zweidimensional angeordneter Detektorpixel eines ersten Kanals und eines zweiten Kanals kann zusätzlich zur Verwendung einer anamorphotischen Abbildungsoptik eine weitere Steigerung einer homogenen Abtastung, die entfernungsunabhängig ist, erreicht werden. In Ausführungsformen ist vorgesehen, dass der erste Kanal Detektorpixel aufweist, die ein anderes Detektorpixelseitenverhältnis aufweisen, als Detektorpixel des zweiten Kanals. Alle Detektorpixel eines Kanals können das gleiche Detektorpixelseitenverhältnis oder unterschiedliche Detektorpixelseitenverhältnisse aufweisen. Zudem können alle Detektorpixel eines Kanals von der Form her gleich oder unterschiedlich sein. Beispielsweise können alle Detektorpixel eines Kanals rechteckig und zudem nicht-quadratisch sein. Es können auch alle Detektorpixel aller Kanäle rechteckig und zudem nicht-quadratisch sein. In einigen Ausführungsformen weist jeder Kanal Detektorpixel auf, die rechteckig und zudem nicht-quadratisch sind, wobei sich das Detektorpixelseitenverhältnis dieser Detektorpixel von Kanal zu Kanal individuell unterscheidet, so dass jeder Kanal über sein Detektorpixelseitenverhältnis eindeutig identifizierbar ist.

In manchen Ausführungsformen der Erfindung ist die erste zweidimensionale Anordnung zur zweiten zweidimensionale Anordnung geometrisch ähnlich. Dies kann den Vorteil haben, dass im Wesentlichen gleiche Herstellungsverfahren für die beiden Kanäle verwendet werden können. So kann eine günstige Mehrkanaloptik-Bildaufnahmevorrichtung bereitgestellt werden, die relativ einfach herzustellen sein kann. Die erste zweidimensionale Anordnung kann in einigen Ausführungsformen durch eine Drehstreckung und eine Translation in die zweite zweidimensionale Anordnung überführt werden. In anderen Ausführungsformen kann die erste zweidimensionale Anordnung durch eine Klappstreckung und eine Translation in die zweite zweidimensionale Anordnung überführt werden. Beispielsweise kann in Ausführungsformen die erste zweidimensionale Anordnung durch eine Translation und eine zusätzliche zweidimensionale Streckung in einer Ebene der Anordnung in die zweite zweidimensionale Anordnung überführbar sein. Die erste zweidimensionale Anordnung kann aber auch der zweiten geometrischen Anordnung gegenüber inkongruent und unähnlich sein. Beispielsweise kann die erste zweidimensionale Anordnung aus einem regelmäßigen Gitter aus Spalten und Zeilen von Detektorpixeln bestehen, während die zweite zweidimensionale Anordnung aus einer pseudozufälligen Anordnung von Detektorpixeln, beispielsweise aus Penrose-Pixeln, besteht.

Einige Ausführungsformen der Erfindung sehen vor, dass die erste zweidimensionale Anordnung durch eine Translation und eine zusätzliche eindimensionale Streckung in die zweite zweidimensionale Anordnung überführbar ist. So kann sich der Vorteil ergeben, dass das Herstellungsverfahren für die Kanalelektronik besonders einfach sein kann.

In einigen Ausführungsformen ist die erste zweidimensionale Anordnung durch eine Translation, eine zusätzliche eindimensionale Streckung und eine zusätzliche Drehung in die zweite zweidimensionale Anordnung überführbar. So können besonders günstige Abtastmuster für den Objektraum bereitgestellt werden. Die erste zweidimensionale Anordnung und die zweite zweidimensionale Anordnung können durch die zusätzliche Drehung so zueinander verstimmt werden, dass eine besonders homogene Abtastung des Objektraums, deren Dichte ausreichend entfernungsunabhängig ist, ermöglicht wird. Beispielsweise kann die Drehung in einer Aufsicht senkrecht zur ersten zweidimensionalen Anordnung um 90° erfolgen. Das bedeutet, dass auf einfache Weise eine zweite zweidimensionale Anordnung geschaffen werden kann, die sich sehr deutlich von der ersten zweidimensionalen Anordnung unterscheiden kann. In anderen Ausführungsformen ist die Drehung kleiner, beispielsweise kleiner als 90° oder auch kleiner als 70° oder auch kleiner als 50° oder auch kleiner als beispielsweise 25°. In Ausführungsformen der Erfindung ist die erste zweidimensionale Anordnung durch eine Translation und eine zusätzliche Drehung in die zweite zweidimensionale Anordnung überführbar, beispielsweise wenn die erste zweidimensionale Anordnung Detektorpixel aufweist, deren Detektorpixelseitenverhältnis sich vom Detektorpixelseitenverhältnis der zweiten zweidimensionalen Anordnung unterscheidet. So kann die Herstellung besonders stark vereinfacht sein und trotzdem der Parallaxen-Effekt verringert werden.

Es gibt Ausführungsformen der Erfindung, bei denen die Detektorpixel der zweidimensionalen Anordnung in Pixelzeilen und Pixelspalten angeordnet sind und die Detektorpixel der zweiten zweidimensionalen Anordnung in Pixelzeilen und Pixelspalten angeordnet sind. So kann eine besonders regelmäßige Abtastung des Objektraums erreicht werden und die Bildaufnahmevorrichtung kann einfach herzustellen sein, wobei gleichzeitig durch die Inkongruenz der ersten zweidimensionalen Anordnung und der zweiten zweidimensionalen Anordnung eine im Wesentlichen entfernungsunabhängige Auflösung des Gesamtbilds erreicht werden kann. Die Detektorpixel können in einer Aufsicht rechteckig und zudem quadratisch geformt sein. Solche Detektorpixel sind besonders einfach herzustellen. Ein oder mehrere Detektorpixel können aber auch in einer Aufsicht rechteckig und zudem nicht-quadratisch geformt sein, beispielsweise, um die Pixelzeilen und Pixelspalten in Ausführungsformen der Erfindung besonders flächendeckend ausfüllen zu können, wenn diese beispielsweise in einer Pixelmatrix angeordnet sein sollen, bei der Pixelzeilen und Pixelspalten rechteckige und zudem nicht-quadratische Felder ausbilden, sich also eine Zeilenhöhe von einer Spaltenbreite unterscheiden soll. Ein Detektorpixel kann rechteckig und zudem nicht-quadratisch geformt sein, wenn er in einer Aufsicht parallel zu einer Detektionsrichtung des Detektorpixels genau vier Seiten aufweist, von denen jeweils zwei gleich lang und zudem parallel zueinander angeordnet sind, so dass zwei Seitenpaare zueinander paralleler Seiten des Detektorpixels eine geometrisch geschlossene Form bilden, die vier gleiche Innenwinkel von jeweils 90 Grad zwischen jeweils zwei Seiten aufweist, wobei zueinander im Winkel von 90 Grad angeordnete Seiten dieser geometrischen Form sich in ihrer Länge unterscheiden, so dass zwei zueinander im Winkel von 90° angeordnete Seiten des Detektorpixels ein Detektorpixelseitenverhältnis zueinander haben, das sich von einem Detektorpixelseitenverhältnis 1:1 unterscheidet. Im Gegensatz dazu kann ein rechteckig und zudem quadratisch geformter Detektorpixel vier gleich lange Seiten haben, die eine geometrisch geschlossene Form mit vier gleichen Innenwinkeln von jeweils 90 Grad bilden, wobei das Detektorpixelseitenverhältnis zweier im Winkel von 90 Grad zueinander angeordneter Seiten 1:1 ist. Beispielsweise ist das Detektorpixelseitenverhältnis eines rechteckigen und zudem nicht-quadratischen Detektorpixels 1:1,05 oder mehr, zum Beispiel also 1:1,1 oder mehr, 1:2 oder mehr oder auch 1:10 oder mehr. Das Detektorpixelseitenverhältnis eines Detektorpixels kann ungleich einem Seitenverhältnis der optischen Verzerrung sein, die in Ausführungsformen durch Mikrolinsen bewirkbar ist. In Ausführungsformen der Erfindung können einer, einige oder alle Detektorpixel in einer Aufsicht entlang einer Detektionsrichtung rund, beispielsweise kreisrund, geformt sein.

Manche Ausführungsformen der Erfindung sehen vor, dass zwei benachbarte Pixelzeilen der ersten zweidimensionalen Anordnung parallel zueinander angeordnet sind und eine Zeilenhöhe aufweisen und zwei benachbarte Pixelspalten der ersten zweidimensionalen Anordnung parallel zueinander angeordnet sind und eine Spaltenbreite aufweisen, wobei die Zeilenhöhe sich von der Spaltenbreite im Betrag unterscheidet. So wird ermöglicht, dass einerseits besonders einfache, regelmäßige zweidimensionale Anordnungen für die Kanäle hergestellt werden können, andererseits aber auch eine gute Abtastung des Objektraums ermöglicht wird, deren Dichte ausreichend entfernungsunabhängig ist. Besondere Vorteile lassen sich erreichen, wenn zudem zwei benachbarte Pixelzeilen der zweiten zweidimensionalen Anordnung parallel zueinander angeordnet sind und eine Zeilenhöhe aufweisen und zwei benachbarte Pixelspalten der zweiten zweidimensionalen Anordnung parallel zueinander angeordnet sind und eine Spaltenbreite aufweisen, wobei die Spaltenbreite sich von der Zeilenhöhe im Betrag unterscheidet. Wenn zwei Kanäle oder auch alle Kanäle der Mehrkanaloptik-Bildaufnahmevorrichtung derart in Pixelzeilen und Pixelspalten zueinander angeordnete zweidimensionale Anordnungen von Detektorpixeln aufweisen, können die Kanäle beide mit einfachen Methoden hergestellt werden und besonders leicht eine Verstimmung der Kanäle zueinander erreicht werden, so dass eine relativ homogene Abtastung des Objektraums unabhängig von der Entfernung des Objekts zur Mehrkanaloptik-Bildaufnahmevorrichtung ermöglicht wird.

Entsprechend ist in einigen Mehrkanaloptik-Bildaufnahmevorrichtungen gemäß der vorliegenden Erfindung vorgesehen, dass die Pixelzeilen der ersten zweidimensionalen Anordnung parallel zueinander angeordnet sind und die Pixelspalten der ersten zweidimensionalen Anordnung parallel zueinander angeordnet sind und die Pixelzeilen der zweiten zweidimensionalen Anordnung parallel zueinander angeordnet sind und die Pixelspalten der zweiten zweidimensionalen Anordnung parallel zueinander angeordnet sind, wobei eine Zeilenhöhe der ersten zweidimensionalen Anordnung hinsichtlich einer Zeilenhöhe der zweiten zweidimensionalen Anordnung vom Betrag her unterschiedlich ist und/oder eine Spaltenbreite der ersten zweidimensionalen Anordnung hinsichtlich einer Spaltenbreite der zweiten zweidimensionalen Anordnung vom Betrag her unterschiedlich ist. Dies ermöglicht eine besonders vorteilhafte Verstimmung zwischen den beiden Kanälen, so dass eine entfernungsunabhängige, relativ homogene Abtastung des Objektraums ermöglicht wird. Auf diese Weise wird verhindert, dass in bestimmten Entfernungen eine große Zahl von Abtastpunkten zusammenfällt, so dass sich die Auflösung des Gesamtbildes in dieser Entfernung verringern würde.

In Ausführungsformen ist vorgesehen, dass die Pixelzeilen und die Pixelspalten der ersten zweidimensionalen Anordnung senkrecht zueinander angeordnet sind und/oder die Pixelzeilen und die Pixelspalten der zweiten zweidimensionalen Anordnung senkrecht zueinander angeordnet sind. Auf diese Weise kann der Objektraum mit einem regelmäßigen Raster abgetastet werden, so dass ein ebensolches regelmäßiges Raster für den Bildraum verwendet werden kann, und eine Umrechnung zwischen einem unregelmäßigen Raster, beispielsweise eines Kanals, und einem regelmäßigen Raster des Gesamtbildes unterbleiben kann. So wird die Erstellung eines Gesamtbildes aus Aufnahmen der einzelnen Kanäle vereinfacht. In manchen Ausführungsformen ist vorgesehen, dass die Zeilen mit den Spalten der ersten zweidimensionalen Anordnung einen Winkel einschließen, der kleiner als 90° ist. Dabei sehen manche Ausführungsformen vor, dass der Winkel kleiner als 70° ist, kleiner als 50° ist, kleiner als 30° ist, oder kleiner als 10° ist. So können beispielsweise rautenförmige zweidimensionale Anordnungen erzeugt werden, in denen beispielsweise rautenförmige Pixel eingesetzt werden können. In einigen Ausführungsformen ist vorgesehen, dass die Zeilen und die Spalten der zweiten zweidimensionalen Anordnung einen Winkel einschließen, der kleiner als 90° ist. Ausführungsformen sehen vor, dass der Winkel kleiner als 80° ist, kleiner als 60° ist, kleiner als 40° ist, kleiner als 20° ist, oder kleiner als 10° ist. Ist der Winkel zwischen Zeilen und Spalten des ersten Kanals und/oder der Winkel zwischen Zeilen und Spalten des zweiten Kanals 90°, liegen die Zeilen und Spalten des Kanals also jeweils senkrecht zueinander, können in Ausführungsformen rechteckige und zudem nicht-quadratische Detektorpixel und/oder rechteckige und zudem quadratische Detektorpixel zum Einsatz kommen, die besonders einfach herzustellen sein können.

In Ausführungsformen der Erfindung sind der erste Kanal und der zweite Kanal unmittelbar benachbart angeordnet. Das bedeutet, dass kein weiterer Kanal zwischen dem ersten Kanal und dem zweiten Kanal angeordnet ist. So kann eine teilweise oder vollständige Überdeckung der Gesichtsfelder der Sensoren erreicht werden, ohne dass die Blickrichtungen der jeweiligen Detektorpixel der Kanäle in großem Maße gegeneinander verkippt sein müssen. Dies kann die Herstellung einer Mehrkanaloptik-Bildaufnahmevorrichtung vereinfachen oder auch kostengünstiger erlauben.

Ausführungsformen der Erfindung sind so gestaltet, dass alle Kanäle der Mehrkanaloptik-Bildaufnahmevorrichtung regelmäßig nebeneinander angeordnet sind. Eine regelmäßig nebeneinander angeordnete Menge von Kanälen kann eine gleichmäßige Abtastung des Objektraums besonders einfach erlauben. Auch können derartig eingerichtete Mehrkanaloptik-Bildaufnahmevorrichtungen vereinfacht hergestellt sein. In einigen Ausführungsformen sind jedoch die Kanäle der Mehrkanaloptik-Bildaufnahmevorrichtung, wie auch beispielsweise die Detektorpixel einiger oder aller Kanäle, zufällig in einer Ebene angeordnet. Dies erlaubt, besonders zuverlässig eine ausreichend entfernungsunabhängige Abtastung des Objektraums zu ermögliche, da es auf diese Weise äußerst unwahrscheinlich werden kann, dass sich in einer bestimmten Entfernung eine große Zahl von Abtastpunkten überlagern, so dass die Auflösung der Aufnahme verringert würde.

Ausführungsformen der Erfindung sehen vor, dass alle Kanäle in Zeilen und Spalten einer regelmäßigen Kanalmatrix nebeneinander und untereinander angeordnet sind. Dem steht nicht entgegen, dass prinzipiell auch einzelne Kanäle von dieser regelmäßigen Kanalmatrix abweichen, wie es in einigen anderen Ausführungsformen vorgesehen ist. Sind jedoch alle Kanäle in Zeilen und Spalten in einer regelmäßigen Kanalmatrix nebeneinander und untereinander angeordnet, so kann eine derartig eingerichtete Mehrkanaloptik-Bildaufnahmevorrichtung besonders einfach herzustellen sein und eine gleichmäßige Abtastung des Objektraums ermöglichen.

In einigen Ausführungsformen umfasst die Mehrkanaloptik-Bildaufnahmevorrichtung gemäß der vorliegenden Erfindung einen dritten Kanal, der eine dritte zweidimensionale Anordnung von Detektorpixeln umfasst, die sowohl gegenüber der ersten zweidimensionalen Anordnung als auch gegenüber der zweiten zweidimensionalen Anordnung inkongruent ist. Durch die Nutzung von drei Kanälen kann die Auflösung des abzubildenden Objekts gesteigert werden. Weitere Steigerungen der Auflösung lassen sich durch weitere Kanäle erreichen. Weitere Steigerungen der Auflösung lassen sich durch die Verwendung von 4, 5, 6 oder mehr, 10 oder mehr, 15 oder mehr, 30 oder mehr, oder auch 50 oder mehr Kanälen erreichen. Dann kann es vorteilhaft sein, dass jeder der Kanäle gegenüber jedem anderen Kanal eine zweidimensionale Anordnung von Detektorpixeln umfasst, die gegenüber den anderen Kanälen inkongruent ist. So kann die Auflösung in jedem beliebigen Abstand zwischen aufzunehmendem Objekt und Mehrkanaloptik-Bildaufnahmevorrichtung fast konstant oder vollständig konstant bleiben.

Manche Ausführungsformen der Erfindung sehen vor, dass der erste Kanal, der zweite Kanal und der dritte Kanal in einer gemeinsamen Kanalmatrix angeordnet sind, in der alle Kanäle der Mehrkanaloptik-Bildaufnahmevorrichtung zueinander parallele Kanalzeilen und zueinander parallele Kanalspalten bilden, wobei die Kanalzeilen und die Kanalspalten senkrecht zueinander angeordnet sind und die erste zweidimensionale Anordnung, die zweite zweidimensionale Anordnung und die dritte zweidimensionale Anordnung aus Detektorpixeln gebildet sind, die jeweils in einer Pixelmatrix aus parallelen Pixelspalten und zu den Pixelspalten senkrecht angeordneten parallelen Pixelzeilen angeordnet sind. So wird auf besonders einfache Weise eine sehr regelmäßige Abtastung des Objektraums ermöglicht und gleichzeitig eine weitgehend oder vollständig entfernungsunabhängige Auflösung ermöglicht.

Ausführungsbeispiele der Erfindung sind in den beigefügten Figuren dargestellt.

Die Figuren zeigen:
Fig. 1a) und 1b) eine eindimensionale Veranschaulichung eines Strahlengangs mit Parallaxeneffekt bei einer Mehrkanaloptik-Bildaufnahmevorrichtung (Stand der Technik);
Fig. 2 eine Aufsicht einer Ausführungsform der vorliegenden Erfindung nach Anspruch 1 in einer Mehrkanaloptik-Bildaufnahmevorrichtung;
Fig. 3 eine Aufsicht einer ersten Ausführungsform der vorliegenden Erfindung nach Anspruch 11 in einer Mehrkanaloptik-Bildaufnahmevorrichtung, die eine plenoptische Kamera ist; und
Fig. 4 eine Aufsicht einer zweiten Ausführungsform der vorliegenden Erfindung nach Anspruch 11 in einer Mehrkanaloptik-Bildaufnahmevorrichtung.

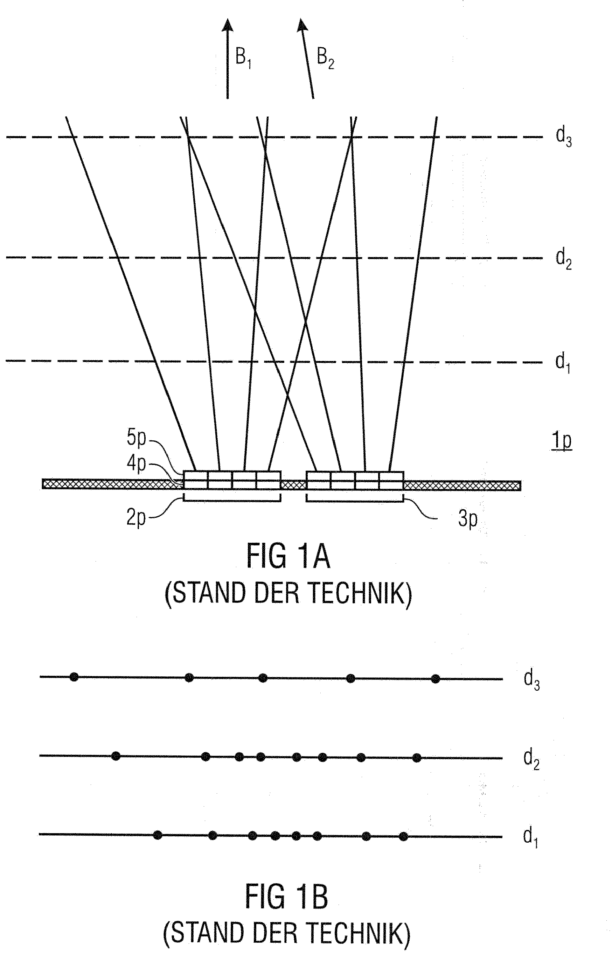

Im Folgenden wird die Erfindung unter Verweis auf die oben aufgeführten Figuren 1 bis 4 erläutert. Die Erfindung ist jedoch nicht auf die dargestellten Ausführungsbeispiele beschränkt. Gleiche Bezugszeichen in unterschiedlichen Ausführungsformen beschreiben vergleichbare Elemente.

Fig. 1 zeigt einen Strahlengang mit Parallaxeneffekt bei einer Mehrkanaloptik-Bildaufnahmevorrichtung 1p. Die Mehrkanaloptik-Bildaufnahmevorrichtung 1p ist dafür eingerichtet, aus Einzelbildern mehrerer Kanäle 2p, 3p ein Gesamtbild zu erstellen. Zu sehen sind in Fig. 1a ein erster Kanal 2p und ein zweiter Kanal 3p, wobei der erste Kanal 2p eine erste zweidimensionale Anordnung von Detektorpixeln 4p und der zweite Kanal 3p eine zweite zweidimensionale Anordnung von Detektorpixeln 4p aufweist. Der erste Kanal 2p umfasst vier Detektorpixel 4p und der zweite Kanal 3p umfasst vier Detektorpixel 4p. Die Detektorpixel 4p sind jeweils quadratisch geformt und jeweils in gleicher Weise regelmäßig nebeneinander in jedem Kanal 2p, 3p angeordnet. Der erste Kanal 2p und der zweite Kanal 3p weisen zudem jeweils eine Abbildungsoptik 5p auf, die dafür eingerichtet ist, eine Abbildung auf die Anordnung von Detektorpixel 4p zu bewirken. Die Abbildungsoptik 5p umfasst für jeden Detektorpixel 4p eine Mikrolinse, die jeweils dafür eingerichtet ist, ein abzubildendes Objekt in einem Seitenverhältnis von 1:1, also unverzerrt, auf dem darunter angeordneten Detektorpixel 4p abzubilden. Der erste Kanal 2p und der zweite Kanal 3p weisen unterschiedliche Blickrichtungen B₁ und B₂ auf, so dass das Gesichtsfeld des ersten Kanals 2p im Objektraum vollständig mit dem Gesichtsfeld des zweiten Kanals 3p überlappt.

Durch die jeweils identische regelmäßige Anordnung der Detektorpixel 4p und die Abbildungsoptiken 5p, die ein abzubildendes Objekt im Seitenverhältnis 1:1 auf den Detektorpixeln 4p abbilden, ist die Auflösung des Gesamtbildes gemäß Figur 1b) entfernungsabhängig. Der erste Kanal 2p und der zweite Kanal 3p können mit ihren jeweils vier Detektorpixeln 4p ein aufzunehmendes Objekt an maximal acht Abtastbereichen abtasten. Es kann also gegenüber einer Einkanaloptik-Bildaufnahmevorrichtung in Entfernungen d1 und d2 ein Supersampling des aufzunehmenden Objekts mit bis zu acht statt mit höchstens vier Abtastbereichen erfolgen. In einer Entfernung d3 überlagern sich die Abtastbereiche von Detektorpixeln 4p des ersten Kanals 2p jedoch mit Abtastbereichen von Detektorpixeln 4p des zweiten Kanals 3p. Es sind nur noch fünf Abtastbereiche vorhanden, so dass die Bildauflösung des Gesamtbilds gegenüber den Entfernungen d1 und d2 absinkt. Man spricht von einem Parallaxeneffekt. Dieser stellt ein Problem dar, denn es ist erwünscht, unabhängig von der Entfernung d eines aufzunehmenden Objekts eine optimale Ausnutzung aller möglichen Abtastbereiche der Detektorpixel 4p zu erreichen. Eine Überlagerung von Abtastbereichen soll also verringert oder ganz vermieden werden, um ein möglichst hoch aufgelöstes Gesamtbild erhalten zu können.

Die Erfindung schlägt als eine erste Lösung eine Mehrkanaloptik-Bildaufnahmevorrichtung 1 vor, bei der zumindest ein erster Kanal 2 eine anamorphotische Abbildungsoptik 5 aufweist und der erste Kanal 2 mit einem zweiten Kanal 3 eine zumindest teilweise Gesichtsfeldüberlappung aufweist. Die Erfindung schlägt als zweite Lösung eine Mehrkanaloptik-Bildaufnahmevorrichtung 1 vor, die zumindest einen ersten Kanal 2 und einen zweiten Kanal 3 aufweist, wobei der erste Kanal 2 mit dem zweiten Kanal 3 eine zumindest teilweise Gesichtsfeldüberlappung aufweist, und der erste Kanal 2 eine erste zweidimensionale Anordnung von Detektorpixeln 4 umfasst und der zweite Kanal 3 eine zweite zweidimensionale Anordnung von Detektorpixeln 4 umfasst und die erste zweidimensionale Anordnung gegenüber der zweiten zweidimensionalen Anordnung inkongruent ist. Dadurch wird jeweils erreicht, dass eine entfernungsabhängige Überlagerung von Abtastbereichen der Detektorpixel 4 verringert oder ganz vermieden wird, so dass das Gesamtbild, das aus den Einzelbildern der Kanäle 2, 3 gebildet wird, eine im Wesentlichen konstante Detailauflösung unabhängig von der Entfernung zum abzubildenden Objekt aufweist.

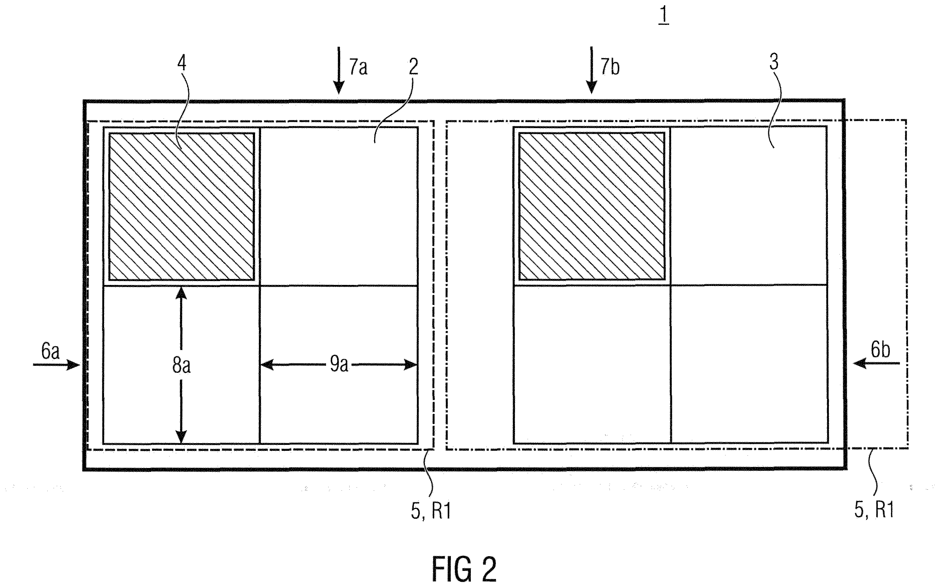

Eine Ausführungsform der Erfindung gemäß der ersten vorgeschlagenen Lösung ist in Fig. 2 dargestellt. Eine Mehrkanaloptik-Bildaufnahmevorrichtung 1 der dort in einer Aufsicht auf die Bildebene gezeigten Art weist einen ersten Kanal 2 und einen zweiten Kanal 3 auf. Der erste Kanal 2 und der zweite Kanal 3 weisen eine vollständige Gesichtsfeldüberlappung auf, da es sich bei der Mehrkanaloptik-Bildaufnahmevorrichtung 1 um eine plenoptische Kamera handelt, die zusätzlich eine weitere Linse aufweist, die der anamorphotischen Abbildungsoptik 5 vorgeschaltet ist. Weil der erste Kanal 2 und der zweite Kanal 3 jedoch unmittelbar benachbart angeordnet sind, weisen der erste Kanal 2 und der zweite Kanal 3 nur leicht unterschiedliche Blickrichtungen auf, die sich auf die Darstellung in Fig. 2 nicht auswirken. Der erste Kanal 2 und der zweite Kanal 3 bilden eine regelmäßige Kanalmatrix mit zwei Kanalspalten und einer Kanalzeile.

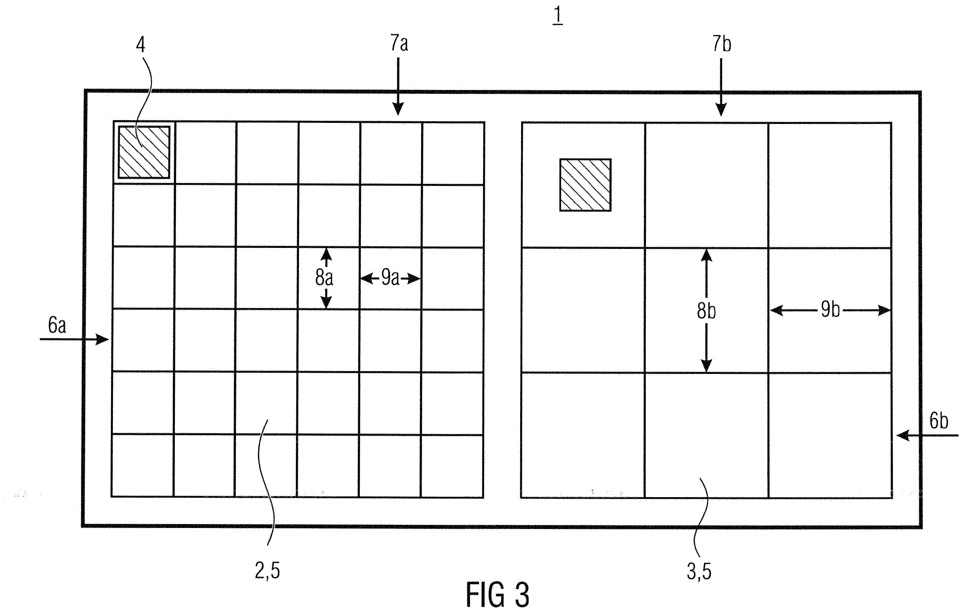

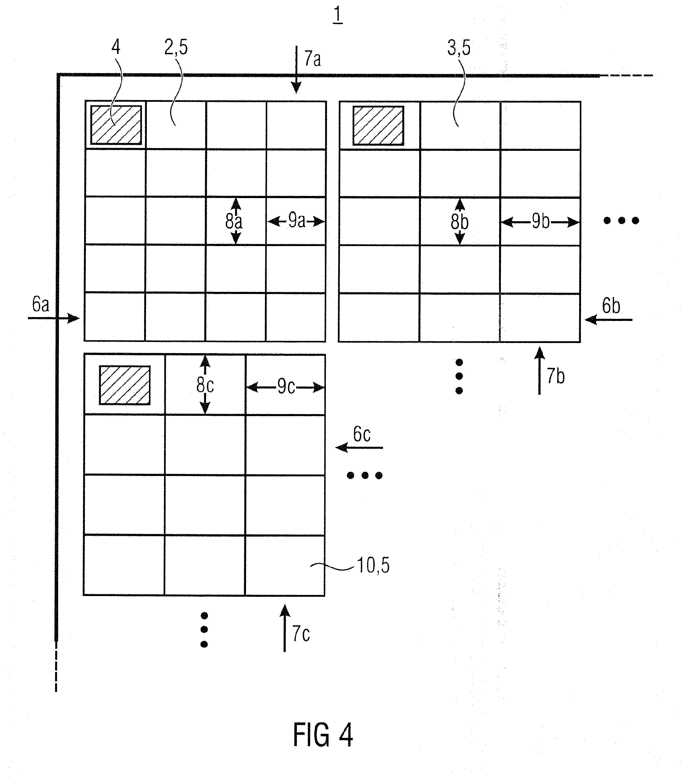

Der erste Kanal 2 weist gemäß Fig. 2 eine ebene erste zweidimensionale Anordnung von Detektorpixeln 4 auf und der zweite Kanal 3 weist eine ebene zweite zweidimensionale Anordnung von Detektorpixeln 4 auf. Sowohl im ersten Kanal 2 als auch im zweiten Kanal 3 sind exemplarisch jeweils nur ein Detektorpixel 4 dargestellt. Pixelzeilen 6a, 6b und Pixelspalten 7a, 7b enthalten jedoch weitere Detektorpixel 4, die nicht dargestellt sind und die voneinander gleichmäßig beabstandet sind, so dass die Pixelzeilen 6a, 6b und die Pixelspalten 7a, 7b gleichmäßig matrixförmig mit einem Detektorpixel 4 pro Feld der Matrix aus Pixelzeilen 6a, 6b und Pixelspalten 7a, 7b besetzt sind. Gleiches gilt analog für die Veranschaulichungen in den Figuren 3 und 4. Die Detektorpixel 4 sind in Fig. 2 in der Aufsicht quadratisch geformt und die erste zweidimensionale Anordnung von Detektorpixeln 4 ist gegenüber der zweiten zweidimensionalen Anordnung von Detektorpixeln 4 kongruent. Es ist jedoch unmittelbar offensichtlich, dass die erste zweidimensionale Anordnung von Detektorpixeln 4 gegenüber der zweiten zweidimensionalen Anordnung von Detektorpixeln 4 in vergleichbaren Ausführungsformen gemäß der ersten vorgeschlagenen Lösung statt dessen inkongruent sein kann.

Der erste Kanal 2 weist eine anamorphotische Abbildungsoptik 5 auf, die dafür eingerichtet ist, eine Abbildung auf die unter ihm angebrachte Anordnung von Detektorpixeln 4 zu bewirken. Der zweite Kanal 3 weist eine anamorphotische Abbildungsoptik 5 auf, die dafür eingerichtet ist, eine Abbildung auf die unter ihm angebrachte Anordnung von Detektorpixeln 4 zu bewirken. Die gestrichelt dargestellten Rechtecke R1 und R2 verdeutlichen, wie die anamorphotische Abbildungsoptik 5 ein abzubildendes Objekt, in diesem Fall ein quadratischer Gegenstand, der in der Realität ein Seitenverhältnis 1:1 aufweist, jeweils auf dem ersten Kanal 2 und auf dem zweiten Kanal 3 abbildet. Die anamorphotische Abbildungsoptik 5 weist eine Mikrolinse auf, die dafür eingerichtet ist, ein abzubildendes Objekt in einem Seitenverhältnis von 1:1,05 oder mehr auf der Anordnung von Detektorpixeln 4 des ersten Kanals 2 verzerrt abzubilden. Die Verzerrung oder Änderung der Verzerrung gegenüber einer durch eine weitere für den jeweiligen Kanal wirksamen Verzerrung kann dabei vorteilhafterweise für den gesamten Kanal gleich, homogen oder zumindest kontinuierlich veränderlich wirksam sein. Deshalb wird der abzubildende quadratische Gegenstand, wie durch R1 veranschaulicht, als rechteckiger Gegenstand mit dem Seitenverhältnis von 1:1,05 oder mehr, genauer 1:1,1, abgebildet. Die anamorphotische Abbildungsoptik 5 weist zudem eine Mikrolinse auf, die dafür eingerichtet ist, das abzubildende Objekt in einem **Seitenverhältnis** von 1:1,4 auf der Anordnung von Detektorpixeln 4 des zweiten Kanals 3 verzerrt abzubilden. Deshalb wird der abzubildende quadratische Gegenstand, wie durch R2 veranschaulicht, als rechteckiger Gegenstand mit dem Seitenverhältnis von 1:1,4 abgebildet. Die Mikrolinsen erreichen dies, indem sie mit einer zylindrischen Oberfläche versehen sind. Die anamorphotische Abbildungsoptik 5 jedes Kanals ist dementsprechend dafür eingerichtet, ein abzubildendes Objekt auf jedem Kanal 2, 3 mit einer dem jeweiligen Kanal 2, 3, hinsichtlich dem anderen Kanal 2, 3, eindeutig zuordenbarer Verzerrung in einem Seitenverhältnis 1:1,05 oder mehr abzubilden. In der dargestellten Ausführungsform gemäß Fig. 2 umfassen somit alle Kanäle 2, 3 eine zweidimensionale Anordnung von Detektorpixeln 4, die je Kanal 2, 3 eine Pixelmatrix aus Pixelzeilen 6a, 6b und Pixelspalten 7a, 7b bilden, wobei die Pixelzeilen 6a und Pixelspalten 7a jedes Kanals 2, 3 jeweils zueinander senkrecht angeordnet sind, und alle Kanäle 2, 3 in einer Kanalmatrix aus zueinander senkrechten Kanalzeilen und Kanalspalten angeordnet sind, und die anamorphotische Abbildungsoptik 5 dafür eingerichtet ist, ein abzubildendes Objekt auf jedem Kanal 2, 3 mit einer dem jeweiligen Kanal 2, 3, hinsichtlich aller anderen Kanälen 2, 3, eindeutig zuordenbarer Verzerrung in einem Seitenverhältnis 1:1,05 oder mehr abzubilden.

Durch die anhand von Fig. 2 veranschaulichte erste Lösung werden über den ersten Kanal 2 andere optische Details über das aufzunehmende Objekt aufgenommen als über den zweiten Kanal 3. Durch eine geeignete Umrechnung der jeweiligen Kanalinformationen erhält man ein Gesamtbild, das entfernungsunabhängig eine hohe Auflösung aufweist, da der erste Kanal 2 und der zweite Kanal 3 über die anamorphotische Abbildungsoptik 5 jeweils unterschiedliche optische Informationen über das abzubildende Objekt aufnehmen können. Die anamorphotische Abbildungsoptik 5 kann bspw. nur in einem Kanal angeordnet sein oder anders ausgedrückt, kann die Abbildungsoptik eines Kanals nicht-anamorphotisch sein. Bezüglich des ersten Kanals wird beispielsweise keine Änderung der Verzerrung durch die jeweilige anamorphotische Abbildungsoptik bewirkt und bezüglich des zweiten Kanals 3 wird eine Änderung der Verzerrung durch die jeweilige Abbildungsoptik bewirkt wird. In diesem Fall kann die bewirkte Verzerrung und/oder das zugehörige Seitenverhältnis dem zweiten Kanal 3 zugeordnet werden. Alternativ oder zusätzlich kann die nicht bewirkte Verzerrung, etwa mittels eines Seitenverhältnisses von 1:1, dem ersten Kanal 2 zugeordnet werden. Wie es oben ausgeführt ist, kann die Abbildungsoptik, die jeweils für den gesamten Kanal eine wirksame Abbildung bewirkt, bezüglich beider, mehrerer oder aller Kanäle anamorphotisch sein. Gemäß einem Ausführungsbeispiel weist jedenfalls am Ende die in der Bildebene der jeweiligen Abbildungsoptik liegende Anordnung der Bilder der in der Objektebene der jeweiligen Abbildungsoptik befindlichen Pixel ein kanalindividuelles Seitenverhältnis von beispielsweise einem horizontalen Pixelmittenabstand zu einem vertikalen Pixelmittenabstand auf, d.h. das Seitenverhältnis ist unter den Kanälen verschieden, d. h. unterscheidet zwischen Kanälen, wodurch sich wie beschrieben das Intervall von Objektabständen erhöht, innerhalb dessen ein Aufeinanderliegen der bildebenseitigen Pixelbilder verschiedener Kanäle vermieden wird. Eine objektebenseitiges Variieren der Bildpunktseitenverhältnisse zwischen Kanälen ist ebenfalls möglich und ist Gegenstand der folgenden Beschreibung.

Ein erstes Ausführungsbeispiel der Erfindung gemäß der zweiten vorgeschlagenen Lösung ist in Fig. 3 dargestellt. Eine Mehrkanaloptik-Bildaufnahmevorrichtung 1 der dort in einer Aufsicht auf die Bildebene gezeigten Art weist zwei Kanäle 2, 3 auf, einen ersten Kanal 2 und einen zweiten Kanal 3. Der erste Kanal 2 und der zweite Kanal 3 weisen eine teilweise Gesichtsfeldüberlappung auf. Der erste Kanal 2 und der zweite Kanal 3 weisen die gleichen Blickrichtungen auf. Auch in dieser Ausführungsform weist jeder Kanal 2, 3 der Mehrkanal-Optikbildaufnahmevorrichtung 1 eine zweidimensionale Anordnung von Detektorpixeln 4 und eine Abbildungsoptik 5, die dafür eingerichtet ist, eine Abbildung auf die Anordnung von Detektorpixeln 4 zu bewirken, auf. Allerdings handelt es sich in diesem Ausführungsbeispiel der zweiten vorgeschlagenen Lösung für jeden Kanal 2, 3 um eine Abbildungsoptik 5, die dafür eingerichtet ist, ein abzubildendes Objekt in einem Seitenverhältnis von 1:1, also unverzerrt gegenüber der Realität, abzubilden. Anstelle einer anamorphotischen Abbildungsoptik 5 sind bei dem ersten Kanal 2 eine erste zweidimensionale Anordnung von Detektorpixeln 4 und bei dem zweiten Kanal 3 eine zweite zweidimensionale Anordnung von Detektorpixeln 4 vorgesehen, wobei die erste zweidimensionale Anordnung gegenüber der zweiten zweidimensionalen Anordnung inkongruent ist. So wird statt mittels einer anamorphotischen Abbildungsoptik 5 durch eine geeignete, erfindungsgemäße Ausgestaltung der zweidimensionalen Anordnungen von Detektorpixeln 4 beim ersten Kanal 2 und beim zweiten Kanal 3 eine weitgehend entfernungsunabhängige Auflösung eines Gesamtbildes sichergestellt. Bei den Detektorpixeln 4 handelt es sich in diesem Ausführungsbeispiel erneut um in einer Aufsicht rechteckige und zudem quadratische Detektorpixel 4, die leicht herzustellen und preisgünstig sind. Es können aber auch in einer Aufsicht rechteckige und nicht-quadratische Detektorpixel 4 oder auch in einer Aufsicht runde Detektorpixel 4 vorgesehen sein, da die erfindungsgemäße Lösung nicht auf eine spezielle Gestaltung der Detektorpixel 4 beschränkt ist.

Im Folgenden werden der erste Kanal 2 und der zweite Kanal 3 gemäß der zweiten Vorgeschlagenen Lösung mit Verweis auf Fig. 3 genauer beschrieben. Die erste zweidimensionale Anordnung ist zur zweiten zweidimensionalen Anordnung ähnlich, denn die Detektorpixel 4 der ersten zweidimensionalen Anordnung sind in einer Matrix aus Pixelzeilen 6a und Pixelspalten 7a angeordnet. Es handelt sich in diesem Ausführungsbeispiel bei der ersten zweidimensionalen Anordnung um eine quadratische Matrix aus sechs Pixelzeilen 6a und sechs Pixelspalten 7a. Zudem sind die Detektorpixel 4 der zweiten zweidimensionalen Anordnung sind in einer Matrix aus Pixelzeilen 6b und Pixelspalten 7b angeordnet. Es handelt sich in diesem Ausführungsbeispiel bei der zweiten zweidimensionalen Anordnung um eine quadratische Matrix aus drei Pixelzeilen 6b und drei Pixelspalten 7b. Anders ausgedrückt, sind sowohl im ersten Kanal 2 als auch im zweiten Kanal 3 jeweils zwei benachbarte Pixelzeilen 6a, 6b parallel zueinander angeordnet und weisen eine Zeilenhöhe 8a, 8b auf und zwei benachbarte Pixelspalten 7a, 7b sind parallel zueinander angeordnet und weisen eine Spaltenbreite 9a, 9b auf, wobei die Zeilenhöhe 8a, 8b im Betrag jeweils der Spaltenbreite 9a, 9b entspricht. Dabei ist die Zeilenhöhe 8a der ersten zweidimensionalen Anordnung hinsichtlich der Zeilenhöhe 8b der zweiten zweidimensionalen Anordnung unterschiedlich und die Spaltenbreite 9a der ersten zweidimensionalen Anordnung hinsichtlich der Spaltenbreite 9b der zweiten zweidimensionalen Anordnung unterschiedlich. Jeder Detektorpixel 4 ist sowohl im ersten Kanal 2 als auch im zweiten Kanal 3 von seinen Nachbarn dem Betrag nach gleich beabstandet, so dass sich für den ersten Kanal 2 ein quadratisches Raster aus Detektorpixeln 4 bildet, das von einem quadratischen Raster des zweiten Kanals 3 unterschiedlich ist. Zwei unterschiedliche Quadrate sind einander mathematisch aber immer ähnlich. Daher sind die erste zweidimensionale Anordnung und die zweite zweidimensionale Anordnung in diesem Ausführungsbeispiel zueinander ähnlich.

Ein zweites Ausführungsbeispiel der Erfindung gemäß der zweiten vorgeschlagenen Lösung ist in Fig. 4 dargestellt. Eine Mehrkanaloptik-Bildaufnahmevorrichtung 1 der dort in einer Aufsicht auf die Bildebene gezeigten Art ist eine plenoptischen Kamera, die zusätzlich eine weitere Linse aufweist, die einer Abbildungsoptik 5 vorgeschaltet ist. Die Mehrkanaloptik-Bildaufnahmevorrichtung 1 weist *N²* Kanäle 2, 3, 10 auf, die in einer regelmäßigen *N x N* Kanalmatrix angeordnet sind, so dass alle Kanäle 2, 3, 10 zu ihren direkten Nachbarkanälen den gleichen Abstand aufweisen und nebeneinander und untereinander angeordnet sind. Alle Kanäle 2, 3, 10 bilden also zueinander parallele Kanalspalten und zueinander parallele Kanalzeilen. Exemplarisch sind ein erster Kanal 2, ein zweiter Kanal 3 und ein dritter Kanal 10 dargestellt. Der erste Kanal 2 hat eine erste zweidimensionale Anordnung von Detektorpixeln 4. Der zweite Kanal 3 hat eine zweite zweidimensionale Anordnung von Detektorpixeln 4. Der erste Kanal 2 und der zweite Kanal 3 sind unmittelbar benachbart angeordnet. Der dritte Kanal 10 hat eine dritte zweidimensionale Anordnung von Detektorpixeln 4. Die dritte zweidimensionale Anordnung ist sowohl gegenüber der ersten zweidimensionalen Anordnung als auch gegenüber der zweiten zweidimensionalen Anordnung inkongruent. Da die erste zweidimensionale Anordnung auch gegenüber der zweiten zweidimensionalen Anordnung inkongruent sind, sind alle drei zweidimensionalen Anordnungen der exemplarisch gezeigten Kanäle 2, 3, 10 inkongruent zueinander. Die verbleibenden *N²*-3 Kanäle sind so eingerichtet, dass alle *N²* Kanäle eindeutig unterscheidbare und zueinander inkongruente zweidimensionale Anordnungen von Detektorpixeln 4 aufweisen. Einige der *N²*-3 weiteren Kanäle weisen pseudozufällige Anordnungen von Detektorpixeln auf, während die verbleibenden der *N²*-3 weiteren Kanäle zweidimensionale Anordnungen mit regelmäßigen Pixelzeilen 6a, 6b, 6c und Pixelspalten 7a, 7b, 7c aufweisen. Selbstverständlich können aber auch alle der *N²*-3 weiteren Kanäle zweidimensionale Anordnungen mit regelmäßigen Pixelzeilen 6a, 6b, 6c und Pixelspalten 7a, 7b, 7c aufweisen, also nur gestalterische Abwandlungen des ersten Kanals 2, des zweiten Kanals 3 oder des dritten Kanals 10 darstellen, um eine möglichst einfache Herstellung zu ermöglichen.

Die erste zweidimensionale Anordnung von Detektorpixeln 4 ist im Ausführungsbeispiel nach Figur 4 eine Anordnung aus rechteckigen und zudem nicht-quadratischen Detektorpixeln 4. Es handelt sich um eine zweidimensionale Anordnung, in der die Detektorpixel 4 in Pixelzeilen 6a, die parallel zueinander angeordnet sind, und Pixelspalten 7a, die parallel zueinander angeordnet sind, angeordnet sind. Zudem sind die Pixelzeilen 6a und die Pixelspalten 7a senkrecht zu einander angeordnet. Die zweite zweidimensionale Anordnung von Detektorpixeln 4 ist im Ausführungsbeispiel nach Figur 4 ebenfalls eine Anordnung aus rechteckigen und zudem nicht-quadratischen Detektorpixeln 4. Es handelt sich um eine weitere zweidimensionale Anordnung, in der die Detektorpixel 4 in Pixelzeilen 6b, die parallel zueinander angeordnet sind, und Pixelspalten 7b, die parallel zueinander angeordnet sind, angeordnet sind. Zudem sind die Pixelzeilen 6b und die Pixelspalten 7b senkrecht zu einander angeordnet. Die dritte zweidimensionale Anordnung von Detektorpixeln 4 ist im Ausführungsbeispiel nach Figur 4 ebenfalls eine Anordnung aus rechteckigen und zudem nicht-quadratischen Detektorpixeln 4. Es handelt sich um eine weitere zweidimensionale Anordnung, in der die Detektorpixel 4 in Pixelzeilen 6c, die parallel zueinander angeordnet sind, und Pixelspalten 7c, die parallel zueinander angeordnet sind, angeordnet sind. Zudem sind die Pixelzeilen 6c und die Pixelspalten 7c senkrecht zu einander angeordnet. Die Detektorpixel 4 des ersten Kanals 2, des zweiten Kanals 3 und des dritten Kanals 10 sind gleich und haben somit die gleichen Detektorpixelseitenverhältnisse. Der erste Kanal 2, der zweite Kanal 3 und der dritte Kanal 10 sind also anhand ihrer jeweiligen Detektorpixelseitenverhältnisse nicht unterscheidbar, denn das Detektorpixelseitenverhältnis der Detektorpixel 4 ist von Kanal zu Kanal gleich. Das Detektorpixelseitenverhältnis beträgt für den ersten Kanal 2, für den zweiten Kanal 3 und für den dritten Kanal 10 jeweils 1:1,05 oder mehr. Es ist aber unmittelbar klar, dass in nicht gezeigten Ausführungsformen der Erfindung für zwei oder auch alle *N²* Kanäle rechteckige und zudem nicht-quadratische Detektorpixel 4 mit von Kanal zu Kanal unterschiedlichen Detektorpixelseitenverhältnissen vorhanden sein können, so dass beispielsweise die Pixelzeilen 6a, 6b, 6c und die Pixelspalten 7a, 7b, 7c zweier oder aller Kanäle hinsichtlich einer bereitgestellten Fläche optimal ausgenutzt werden, wie es in dem Ausführungsbeispiel gemäß Fig. 4 nicht der Fall ist. Dann kann beispielsweise jeder Kanal anhand seines individuellen Pixelseitenverhältnisses, das somit für keine zwei Kanäle gleich ist, eindeutig identifiziert werden. Von einander verschiedene Detektorpixelseitenverhältnisse können dabei so verstanden werden, dass das Detektorpixelseitenverhältnis eines Kanals, etwa des Kanals 2, einen Wert von 1:x und das Pixelseitenverhältnis eines anderen Kanals, etwa des Kanals 3, einen Wert von 1:y aufweist, x und y können einen Wert von 1,05 oder mehr aufweisen und sind von einander verschieden. Alternativ kann der andere Kanal ein Detektorpixelseitenverhältnisse von y:1 oder x:1 aufweisen. Ein Detektorpixelseitenverhältnis von x:1 oder y:1 bedeutet eine verglichen mit Pixeln, die das Detektorpixelseitenverhältnis 1:x oder 1:y aufweisen, um einen Winkel von ±90° oder ±270° verdrehte Anordnung der Detektorpixel.

Die Kanäle 2, 3 und/oder 10 können, anders als es dargestellt ist, auch eine gleiche Anzahl von Detektorpixeln aufweisen, und darüber hinaus eine gleiche Anzahl von Spalten und Zeilen aufweisen. Dies kann vorteilhaft sein, um eine Vergleichbarkeit und/oder Kombinierbarkeit der Bilder der einzelnen Kanäle zu erhalten. Dies kann insbesondere so erfolgen, dass die Detektorpixel 4 des ersten Kanals 2 um einen Winkel von 90° gegenüber den Detektorpixeln 4 des zweiten Kanals gedreht angeordnet sind.

Die erste zweidimensionale Anordnung hat eine Zeilenhöhe 6a und eine Spaltenbreite 7a, die sich im Betrag von der Zeilenhöhe 6a der ersten zweidimensionalen Anordnung unterscheidet. Zudem unterscheidet sich die Spaltenbreite 7a der ersten zweidimensionalen Anordnung im Betrag von einer Spaltenbreite 7b der zweiten zweidimensionalen Anordnung. Die Zeilenhöhe 6a der ersten zweidimensionalen Anordnung entspricht einer Zeilenhöhe 6b der zweiten zweidimensionalen Anordnung. Das bedeutet, dass die erste zweidimensionale Anordnung durch eine Translation und eine zusätzliche eindimensionale Streckung in die zweite zweidimensionale Anordnung überführbar ist. Es ist unmittelbar klar, dass die zweite zweidimensionale Anordnung auch in der Ansichtsebene gedreht angeordnet sein könnte, beispielsweise um 90° gedreht, so dass die erste zweidimensionale Anordnung durch eine Translation, eine zusätzliche eindimensionale Streckung und eine zusätzliche Drehung in die zweite zweidimensionale Anordnung überführbar wäre.

Die dritte zweidimensionale Anordnung hat eine Zeilenhöhe 6c und eine Spaltenbreite 7c, die sich im Betrag von der Zeilenhöhe 6c der dritten zweidimensionalen Anordnung unterscheidet. Zudem unterscheidet sich der Betrag der Zeilenhöhe 6c der dritten zweidimensionalen Anordnung sowohl vom Betrag der Zeilenhöhe 6a der ersten zweidimensionalen Anordnung als auch vom Betrag der Zeilenhöhe 6b der zweiten zweidimensionalen Anordnung. Außerdem unterscheidet sich der Betrag der Spaltenbreite 7c der dritten zweidimensionalen Anordnung sowohl vom Betrag der Spaltenbreite 7a der ersten zweidimensionalen Anordnung als auch vom Betrag der Spaltenbreite 7b der zweiten zweidimensionalen Anordnung. In dieser Ausführungsform sind also die Pixelzeilen 6a der ersten zweidimensionalen Anordnung parallel zueinander angeordnet und die Pixelspalten 7a der ersten zweidimensionalen Anordnung parallel zueinander angeordnet und die Pixelzeilen 6b der zweiten zweidimensionalen Anordnung parallel zueinander angeordnet und die Pixelspalten 7b der zweiten zweidimensionalen Anordnung parallel zueinander angeordnet, wobei die Zeilenhöhe 8a der ersten zweidimensionalen Anordnung hinsichtlich der Zeilenhöhe 8c der dritten zweidimensionalen Anordnung vom Betrag her gleich ist und die Spaltenbreite 9a der ersten zweidimensionalen Anordnung hinsichtlich der Spaltenbreite 9b der zweiten zweidimensionalen Anordnung vom Betrag her unterschiedlich. Zudem sind in dieser Ausführungsform die Pixelzeilen 6a der ersten zweidimensionalen Anordnung parallel zueinander angeordnet und die Pixelspalten 7a der ersten zweidimensionalen Anordnung parallel zueinander angeordnet und die Pixelzeilen 6c der dritten zweidimensionalen Anordnung parallel zueinander angeordnet und die Pixelspalten 7c der dritten zweidimensionalen Anordnung parallel zueinander angeordnet, wobei die Zeilenhöhe 8a der ersten zweidimensionalen Anordnung hinsichtlich der Zeilenhöhe 8c der dritten zweidimensionalen Anordnung vom Betrag her unterschiedlich ist und die Spaltenbreite 9a der ersten zweidimensionalen Anordnung hinsichtlich der Spaltenbreite 9c der dritten zweidimensionalen Anordnung vom Betrag her unterschiedlich. Es ist jedoch offensichtlich, dass statt der oder zusätzlich zur dritten zweidimensionalen Anordnung auch die zweite zweidimensionale Anordnung in Bezug auf die erste zweidimensionale Anordnung in nicht dargestellten Ausführungsformen derart ausgestaltet ist.

Bei allen Kanälen der regelmäßigen *N x N* Kanalmatrix gemäß Fig. 4, die ebenfalls eine derart regelmäßige Matrix aus Pixelzeilen 6a, 6b, 6c und Pixelspalten 7a, 7b, 7c aufweisen, sind die Zeilenhöhe 6 eines beliebigen Kanals und dessen Spaltenbreite 7 so gewählt, dass keine zwei Kanäle der *N²* Kanäle der Kanalmatrix die gleiche Zeilenhöhe 6 und zugleich die gleiche Spaltenbreite 7 aufweisen. So wird eine bestmögliche Abdeckung des Objektraumes erreicht und eine weitgehend entfernungsunabhängige Auflösung für die Mehrkanaloptik-Bildaufnahmevorrichtung ermöglicht.

Die vorgenannten Merkmale können jeweils für sich genommen oder in beliebiger Kombination miteinander für die Erfindung von Bedeutung sein und auf diese Weise zu einer erfindungsgemäßen Lösung beitragen.

Ein erster Aspekt betrifft eine Mehrkanaloptik-Bildaufnahmevorrichtung 1, bei der zumindest ein erster Kanal 2 eine anamorphotische Abbildungsoptik 5 aufweist und der erste Kanal 2 zumindest mit einem zweiten Kanal 3 eine zumindest teilweise Gesichtsfeldüberlappung aufweist.

Gemäß einem zweiten Aspekt unter Bezugnahme auf den ersten Aspekt weist jeder Kanal 2, 3, 10 der Mehrkanaloptik-Bildaufnahmevorrichtung 1 Folgendes auf: eine zweidimensionale Anordnung von Detektorpixeln 4; und eine Abbildungsoptik 5, die dafür eingerichtet ist, eine Abbildung auf die Anordnung von Detektorpixeln 4 zu bewirken.

Gemäß einem dritten Aspekt unter Bezugnahme auf zumindest einen des ersten bis zweiten Aspekts weisen zwei oder mehr Kanäle 2, 3, 10 unterschiedliche Blickrichtungen auf.

Gemäß einem vierten Aspekt unter Bezugnahme auf zumindest einen des ersten bis dritten Aspekts überlappen sich die Gesichtsfelder von zwei oder mehr Kanälen 2, 3, 10 teilweise.

Gemäß einem fünften Aspekt unter Bezugnahme auf zumindest einen des ersten bis vierten Aspekts überlappen sich die Gesichtsfelder mindestens zweier Kanäle 2, 3, 10 vollständig.

Gemäß einem sechsten Aspekt unter Bezugnahme auf zumindest einen des ersten bis fünften Aspekts weist die anamorphotische Abbildungsoptik 5 eine oder mehrere Mikrolinsen auf, die dafür eingerichtet sind, ein abzubildendes Objekt in einem Seitenverhältnis 1:1,05 oder mehr auf einer Anordnung von Detektorpixeln 4 des ersten Kanals 2 verzerrt abzubilden.

Gemäß einem siebten Aspekt unter Bezugnahme auf zumindest einen des ersten bis sechsten Aspekts umfassen alle Kanäle 2, 3, 10 eine zweidimensionale Anordnung von Detektorpixeln 4, die je Kanal 2, 3, 10 eine Pixelmatrix aus Pixelzeilen 6a, 6b, 6c und Pixelspalten 7a, 7b, 7c bilden, wobei die Pixelzeilen 6a, 6b, 6c und Pixelspalten 7a, 7b, 7c jedes Kanals 2, 3, 10 jeweils zueinander senkrecht angeordnet sind, und alle Kanäle 2, 3, 10 in einer Kanalmatrix aus zueinander senkrechten Kanalzeilen und Kanalspalten angeordnet sind, und die anamorphotische Abbildungsoptik 5 dafür eingerichtet ist, ein abzubildendes Objekt auf jedem Kanal 2, 3, 10 mit einer dem jeweiligen Kanal 2, 3, 10, hinsichtlich allen anderen Kanälen 2, 3, 10, eindeutig zuordenbarer Verzerrung in einem Seitenverhältnis 1:1,05 oder mehr abzubilden.

Gemäß einem achten Aspekt unter Bezugnahme auf zumindest einen des ersten bis siebten Aspekts weist die anamorphotische Abbildungsoptik 5 eine oder mehrere Mikrolinsen mit einer zylindrischen Oberfläche auf.

Gemäß einem neunten Aspekt unter Bezugnahme auf zumindest einen des ersten bis achten Aspekts ist die Mehrkanal-Bildaufnahmevorrichtung 1 eine plenoptische Kamera, die zusätzlich eine weitere Linse aufweist, die der anamorphotischen Abbildungsoptik 5 vorgeschaltet ist.

Gemäß einem zehnten Aspekt unter Bezugnahme auf zumindest einen des ersten bis neunten Aspekts umfasst der erste Kanal 2 eine erste zweidimensionale Anordnung von Detektorpixeln 4 und der zweite Kanal 3 eine zweite zweidimensionale Anordnung von Detektorpixeln 4, und die erste zweidimensionale Anordnung ist gegenüber der zweiten zweidimensionalen Anordnung inkongruent.

Ein elfter Aspekt betrifft eine Mehrkanaloptik-Bildaufnahmevorrichtung 1, die zumindest einen ersten Kanal 2 und einen zweiten Kanal 3 aufweist, wobei der erste Kanal 2 mit dem zweiten Kanal 3 eine zumindest teilweise Gesichtsfeldüberlappung aufweist, und der erste Kanal 2 eine erste zweidimensionale Anordnung von Detektorpixeln 4 umfasst und der zweite Kanal 3 eine zweite zweidimensionale Anordnung von Detektorpixeln 4 umfasst und die erste zweidimensionale Anordnung gegenüber der zweiten zweidimensionalen Anordnung inkongruent ist.

Gemäß einem zwölften Aspekt unter Bezugnahme auf den elften Aspekt weist jeder Kanal 2, 3, 10 der Mehrkanaloptik-Bildaufnahmevorrichtung 1 Folgendes auf: eine zweidimensionale Anordnung von Detektorpixeln 4; und eine Abbildungsoptik 5, die dafür eingerichtet ist, eine Abbildung auf die Anordnung von Detektorpixeln 4 zu bewirken.

Gemäß einem dreizehnten Aspekt unter Bezugnahme auf zumindest einen des zehnten bis zwölften Aspekts ist die erste zweidimensionale Anordnung zur zweiten zweidimensionalen Anordnung geometrisch ähnlich.

Gemäß einem vierzehnten Aspekt unter Bezugnahme auf zumindest einen des zehnten bis dreizehnten Aspekts ist die erste zweidimensionale Anordnung durch eine Translation und eine zusätzliche eindimensionale Streckung in die zweite zweidimensionale Anordnung überführbar.

Gemäß einem fünfzehnten Aspekt unter Bezugnahme auf zumindest einen des zehnten bis vierzehnten Aspekts ist die erste zweidimensionale Anordnung durch eine Translation, eine zusätzliche eindimensionale Streckung und eine zusätzliche Drehung in die zweite zweidimensionale Anordnung überführbar.

Gemäß einem sechzehnten Aspekt unter Bezugnahme auf zumindest einen des zehnten bis fünfzehnten Aspekts sind die Detektorpixel 4 der ersten zweidimensionalen Anordnung in Pixelzeilen 6a und Pixelspalten 6b angeordnet und die Detektorpixel 4 der zweiten zweidimensionalen Anordnung in Pixelzeilen 6b und Pixelspalten 7b angeordnet.

Gemäß einem siebzehnten Aspekt unter Bezugnahme auf den sechzehnten Aspekt sind zwei benachbarte Pixelzeilen 6a der ersten zweidimensionale Anordnung parallel zueinander angeordnet und weisen eine Zeilenhöhe 8a auf und zwei benachbarte Pixelspalten 7a der ersten zweidimensionalen Anordnung sind parallel zueinander angeordnet und haben eine Spaltenbreite 9a, wobei die Zeilenhöhe 8a sich von der Spaltenbreite 9a im Betrag unterscheidet.

Gemäß einem achtzehnten Aspekt unter Bezugnahme auf zumindest einen des sechzehnten bis siebzehnten Aspekts sind die Pixelzeilen 6a der ersten zweidimensionalen Anordnung parallel zueinander angeordnet und die Pixelspalten 7a der ersten zweidimensionalen Anordnung parallel zueinander angeordnet und die Pixelzeilen 6b der zweiten zweidimensionalen Anordnung parallel zueinander angeordnet und die Pixelspalten 7b der zweiten zweidimensionalen Anordnung parallel zueinander angeordnet, wobei eine Zeilenhöhe 8a der ersten zweidimensionalen Anordnung hinsichtlich einer Zeilenhöhe 8b der zweiten zweidimensionalen Anordnung vom Betrag her unterschiedlich ist und/oder eine Spaltenbreite 9a der ersten zweidimensionalen Anordnung hinsichtlich einer Spaltenbreite 9b der zweiten zweidimensionalen Anordnung vom Betrag her unterschiedlich ist.

Gemäß einem neunzehnten Aspekt unter Bezugnahme auf zumindest einen des sechzehnten bis achtzehnten Aspekts sind die Pixelzeilen 6a und die Pixelspalten 7a der ersten zweidimensionalen Anordnung senkrecht zueinander angeordnet und/oder die Pixelzeilen 6b und die Pixelspalten 7b der zweiten zweidimensionalen Anordnung senkrecht zueinander angeordnet.

Gemäß einem zwanzigsten Aspekt unter Bezugnahme auf zumindest einen des zehnten bis neunzehnten Aspekts sind der erste Kanal 2 und der zweite Kanal 3 unmittelbar benachbart angeordnet.

Gemäß einem einundzwanzigsten Aspekt unter Bezugnahme auf zumindest einen des zehnten bis zwanzigsten Aspekts sind alle Kanäle 2, 3, 10 der Mehrkanaloptik-Bildaufnahmevorrichtung regelmäßig nebeneinander angeordnet.

Gemäß einem zweiundzwanzigsten Aspekt unter Bezugnahme auf zumindest einen des zehnten bis einundzwanzigsten Aspekts sind alle Kanäle 2, 3, 10 in Kanalzeilen und Kanalspalten einer regelmäßigen Kanalmatrix nebeneinander und untereinander angeordnet.

Gemäß einem dreiundzwanzigsten Aspekt unter Bezugnahme auf zumindest einen des zwölften bis zweiundzwanzigsten Aspekts ist die Mehrkanal-Bildaufnahmevorrichtung 1 eine plenoptische Kamera, die zusätzlich eine weitere Linse aufweist, die der Abbildungsoptik 5 vorgeschaltet ist.

Gemäß einem vierundzwanzigsten Aspekt unter Bezugnahme auf zumindest einen des zehnten bis dreiundzwanzigsten Aspekts umfasst die Mehrkanal-Bildaufnahmevorrichtung 1 einen dritten Kanal 10 und der dritte Kanal 10 eine dritte zweidimensionale Anordnung von Detektorpixeln, die sowohl gegenüber der ersten zweidimensionalen Anordnung als auch gegenüber der zweiten zweidimensionalen Anordnung inkongruent ist.

Gemäß einem fünfundzwanzigsten Aspekt unter Bezugnahme auf den vierundzwanzigsten Aspekt sind der erste Kanal 2, der zweite Kanal 3 und der dritte Kanal 10 in einer gemeinsamen Kanalmatrix angeordnet, in der alle Kanäle 2, 3, 10 der Mehrkanaloptik-Bildaufnahmevorrichtung 1 zueinander parallele Kanalzeilen und zueinander parallele Kanalspalten bilden, wobei die erste zweidimensionale Anordnung, die zweite zweidimensionale Anordnung und die dritte zweidimensionale Anordnung aus Detektorpixeln 4 gebildet sind, die jeweils in einer Pixelmatrix aus parallelen Pixelspalten 6a, 6b, 6c und zu den Pixelspalten 7a, 7b, 7c senkrecht angeordneten parallelen Pixelzeilen angeordnet sind.

Ein sechsundzwanzigster Aspekt betrifft eine Mehrkanaloptik-Bildaufnahmevorrichtung 1, bei der zumindest ein erster Kanal 2 eine anamorphotische Abbildungsoptik 5 aufweist und der erste Kanal 2 zumindest mit einem zweiten Kanal 3 eine zumindest teilweise Gesichtsfeldüberlappung aufweist; wobei eine Verzerrung der anamorphotischen Abbildungsoptik 5 des ersten Kanals 2 so ausgebildet ist, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist.

Ein siebenundzwanzigster Aspekt betrifft eine Mehrkanaloptik-Bildaufnahmevorrichtung 1, die zumindest einen ersten Kanal 2 und einen zweiten Kanal 3 aufweist, wobei der erste Kanal 2 mit dem zweiten Kanal 3 eine zumindest teilweise Gesichtsfeldüberlappung aufweist, und der erste Kanal 2 eine erste zweidimensionale Anordnung von Detektorpixeln 4 umfasst und der zweite Kanal 3 eine zweite zweidimensionale Anordnung von Detektorpixeln 4 umfasst und die erste zweidimensionale Anordnung gegenüber der zweiten zweidimensionalen Anordnung inkongruent ist, und wobei die Detektorpixel 4 des ersten Kanals 2 ein anderes Detektorpixelseitenverhältnis aufweisen, als Detektorpixel 4 des zweiten Kanals 3.

Gemäß einem achtundzwanzigsten Aspekt unter Bezugnahme auf den siebenundzwanzigsten Aspekt sind alle Kanäle 2, 3, 10 der Mehrkanaloptik-Bildaufnahmevorrichtung zu ihren direkten Nachbarkanälen 2, 3, 10 den gleichen Abstand aufweisend nebeneinander angeordnet.

Gemäß einem neunundzwanzigsten Aspekt unter Bezugnahme auf zumindest einen des siebenundzwanzigsten bis achtundzwanzigsten Aspekts sind alle Kanäle 2, 3, 10 in den gleichen Abstand zueinander aufweisenden Kanalzeilen und Kanalspalten einer Kanalmatrix nebeneinander und untereinander angeordnet.

Ein dreißigster Aspekt betrifft ein Mehrkanaloptik-Bildaufnahmeverfahren, bei dem ein aufzunehmendes Objekt mit einer Mehrkanal-Bildaufnahmevorrichtung 1 aufgenommen wird, bei der zumindest ein erster Kanal 2 eine anamorphotische Abbildungsoptik 5 aufweist und der erste Kanal 2 zumindest mit einem zweiten Kanal 3 eine zumindest teilweise Gesichtsfeldüberlappung aufweist.

Ein einunddreißigster Aspekt betrifft ein Mehrkanaloptik-Bildaufnahmeverfahren 1, bei dem ein aufzunehmendes Objekt mit einer Mehrkanal-Bildaufnahmevorrichtung 1 aufgenommen wird, die zumindest einen ersten Kanal 2 und einen zweiten Kanal 3 aufweist und der erste Kanal 2 mit dem zweiten Kanal 3 eine zumindest teilweise Gesichtsfeldüberlappung aufweist, wobei der erste Kanal 2 eine erste zweidimensionale Anordnung von Detektorpixeln 4 umfasst und der zweite Kanal 3 eine zweite zweidimensionale Anordnung von Detektorpixeln 4 umfasst, und die erste zweidimensionale Anordnung gegenüber der zweiten zweidimensionalen Anordnung inkongruent ist.

Ein zweiunddreißigster Aspekt betrifft ein Mehrkanaloptik-Bildaufnahmeverfahren, bei dem ein aufzunehmendes Objekt mit einer Mehrkanal-Bildaufnahmevorrichtung 1 aufgenommen wird, bei der zumindest ein erster Kanal 2 eine anamorphotische Abbildungsoptik 5 aufweist und der erste Kanal 2 zumindest mit einem zweiten Kanal 3 eine zumindest teilweise Gesichtsfeldüberlappung aufweist, wobei eine Verzerrung der anamorphotischen Abbildungsoptik 5 des ersten Kanals 2 so ausgebildet ist, dass ein Abbild eines Objekts in dem ersten Kanal ein erstes Seitenverhältnis und in dem zweiten Kanal ein zweites Seitenverhältnis aufweist, wobei das erste Seitenverhältnis dem ersten Kanal eindeutig zugeordnet ist und das zweite Seitenverhältnis dem zweiten Kanal eindeutig zugeordnet ist.

Ein dreiunddreißigster Aspekt betrifft ein Mehrkanaloptik-Bildaufnahmeverfahren 1, bei dem ein aufzunehmendes Objekt mit einer Mehrkanal-Bildaufnahmevorrichtung 1 aufgenommen wird, die zumindest einen ersten Kanal 2 und einen zweiten Kanal 3 aufweist und der erste Kanal 2 mit dem zweiten Kanal 3 eine zumindest teilweise Gesichtsfeldüberlappung aufweist, wobei der erste Kanal 2 eine erste zweidimensionale Anordnung von Detektorpixeln 4 umfasst und der zweite Kanal 3 eine zweite zweidimensionale Anordnung von Detektorpixeln 4 umfasst, und die erste zweidimensionale Anordnung gegenüber der zweiten zweidimensionalen Anordnung inkongruent ist, und wobei die Detektorpixel 4 des ersten Kanals 2 ein anderes Detektorpixelseitenverhältnis aufweisen, als Detektorpixel 4 des zweiten Kanals 3.

### Bezugszeichenliste

- 1, 1p: Mehrkanaloptik-Bildaufnahmevorrichtung
- 2, 2p: Erster Kanal
- 3, 3p: Zweiter Kanal
- 4, 4p: Detektorpixel
- 5, 5p: Abbildungsoptik
- 6a, b, c: Pixelzeile
- 7a, b, c: Pixelspalte
- 8a, b, c: Zeilenhöhe
- 9a, b, c: Spaltenbreite
- 10: Dritter Kanal

- B1: Erste Blickrichtung
- B2: Zweite Blickrichtung

- R1: Erste Abbildung eines Objekts
- R2: Zweite Abbildung eines Objekts

### Referenzliste

[1] Fleet, Kanaev, Scribner, Ackerman: Scene Independent Method for Image Formation in Lenslet Array Imagers. Patentanmeldung US 20100013857A1
[2] Kartik Venkartaraman, Amandeed S. Jabbi, Robert H. Mullis: Capturing and processing of images using monolithic camera array with heterogeneous imagers, ep09763194
[3] A. Oberdörster, F. Wippermann, A. Brückner: Bildaufnahmevorrichtung und Verfahren zum Aufnehmen eines Bildes, Deutsche Patentanmeldung 102010031535.4-31
[4] Ren Ng, Marc Levoy, Mathieu Bredif: Light Field Photography with a Hand-Held Plenoptic Camera. Stanford University Computer Science Tech Report CSTR 2005-02. April, 2005
[5] T. Georgiev, A. Lumsdaine: Focused Plenoptic Camera and Rendering. Journal of Electronic Imaging, Volume 19, Issue 2, 2010.
[6] Koskinen Samu T; Alakarhu Juha H; Salmelin EERO: Lenslet camera with rotated sensors, US020100321511A1
[7] M. Ben-Ezra, Z. Lin, B. Wilburn, and W. Zhang: Penrose Pixels for SuperResolution. IEEE Transactions on Pattern Analysis and Machine Intelligence (PAMI), Vol. 33, No. 7, pp. 1370-1383, July 2011.

## Patentansprüche

1. Mehrkanaloptik-Bildaufnahmevorrichtung (1), die einen ersten Kanal (2) und einen zweiten Kanal (3) aufweist, wobei der erste Kanal (2) mit dem zweiten Kanal (3) eine zumindest teilweise Gesichtsfeldüberlappung aufweist, und der erste Kanal (2) eine erste zweidimensionale Anordnung von Detektorpixeln (4) umfasst und der zweite Kanal (3) eine zweite zweidimensionale Anordnung von Detektorpixeln (4) umfasst, **dadurch gekennzeichnet, dass**
die erste zweidimensionale Anordnung gegenüber der zweiten zweidimensionalen Anordnung inkongruent ist;
wobei die Mehrkanaloptik-Bildaufnahmevorrichtung (1) einen dritten Kanal (10) umfasst und der dritte Kanal (10) eine dritte zweidimensionale Anordnung von Detektorpixeln umfasst, die sowohl gegenüber der ersten zweidimensionalen Anordnung als auch gegenüber der zweiten zweidimensionalen Anordnung inkongruent ist;
wobei die erste zweidimensionale Anordnung durch eines aus einer Translation und einer zusätzlichen eindimensionalen Streckung einerseits; und einer Translation, einer zusätzlichen eindimensionalen Streckung und einer zusätzliche Drehung in die zweite zweidimensionale Anordnung andererseits überführbar ist; oder wobei die erste zweidimensionale Anordnung zur zweiten zweidimensionalen Anordnung geometrisch ähnlich ist.

2. Mehrkanaloptik-Bildaufnahmevorrichtung (1) nach Anspruch 1, wobei der erste Kanal (2) und der zweite Kanal (3) unmittelbar benachbart angeordnet sind.

3. Mehrkanaloptik-Bildaufnahmevorrichtung Anspruch 1 oder 2, wobei alle Kanäle (2, 3, 10) der Mehrkanaloptik-Bildaufnahmevorrichtung regelmäßig nebeneinander angeordnet sind.

4. Mehrkanaloptik-Bildaufnahmevorrichtung (1) nach einem der Ansprüche 1 bis 3, wobei die Detektorpixel (4) des ersten Kanals (2) ein anderes Detektorpixelseitenverhältnis aufweisen, als Detektorpixel (4) des zweiten Kanals (3);
wobei alle Kanäle (2, 3, 10) der Mehrkanaloptik-Bildaufnahmevorrichtung zu ihren direkten Nachbarkanälen (2, 3, 10) den gleichen Abstand aufweisend nebeneinander angeordnet sind.

5. Mehrkanaloptik-Bildaufnahmevorrichtung (1) nach Anspruch 4, wobei alle Kanäle (2, 3, 10) in den gleichen Abstand zueinander aufweisenden Kanalzeilen und Kanalspalten einer Kanalmatrix nebeneinander und untereinander angeordnet sind.

6. Mehrkanaloptik-Bildaufnahmeverfahren (1), bei dem ein aufzunehmendes Objekt mit einer Mehrkanal-Bildaufnahmevorrichtung (1) aufgenommen wird, die einen ersten Kanal (2) und einen zweiten Kanal (3) aufweist und der erste Kanal (2) mit dem zweiten Kanal (3) eine zumindest teilweise Gesichtsfeldüberlappung aufweist, **dadurch gekennzeichnet, dass**
der erste Kanal (2) eine erste zweidimensionale Anordnung von Detektorpixeln (4) umfasst und der zweite Kanal (3) eine zweite zweidimensionale Anordnung von Detektorpixeln (4) umfasst, und die erste zweidimensionale Anordnung gegenüber der zweiten zweidimensionalen Anordnung inkongruent ist;
wobei die Mehrkanal-Bildaufnahmevorrichtung (1) einen dritten Kanal (10) umfasst und der dritte Kanal (10) eine dritte zweidimensionale Anordnung von Detektorpixeln umfasst, die sowohl gegenüber der ersten zweidimensionalen Anordnung als auch gegenüber der zweiten zweidimensionalen Anordnung inkongruent ist;
wobei die erste zweidimensionale Anordnung durch eines aus einer Translation und einer zusätzlichen eindimensionalen Streckung einerseits; und einer Translation, einer zusätzlichen eindimensionalen Streckung und einer zusätzliche Drehung andererseits in die zweite zweidimensionale Anordnung überführbar ist; oder
wobei die erste zweidimensionale Anordnung zur zweiten zweidimensionalen Anordnung geometrisch ähnlich ist.

7. Mehrkanaloptik-Bildaufnahmeverfahren (1) nach Anspruch 6, bei dem die Detektorpixel (4) des ersten Kanals (2) ein anderes Detektorpixelseitenverhältnis aufweisen als Detektorpixel (4) des zweiten Kanals (3);
wobei alle Kanäle (2, 3, 10) der Mehrkanaloptik-Bildaufnahmevorrichtung zu ihren direkten Nachbarkanälen (2, 3, 10) den gleichen Abstand aufweisend nebeneinander angeordnet sind.
